(19) **Europäisches Patentamt** / **European Patent Office** / **Office européen des brevets**

(11) **EP 2 897 012 B1**

(12) **EUROPEAN PATENT SPECIFICATION**

(45) Date of publication and mention of the grant of the patent:
**07.03.2018 Bulletin 2018/10**

(21) Application number: **12887090.4**

(22) Date of filing: **25.10.2012**

(51) Int Cl.:
***G05B 23/02*** (2006.01)

(86) International application number:
**PCT/JP2012/077654**

(87) International publication number:
**WO 2014/064816 (01.05.2014 Gazette 2014/18)**

(54) **PLANT MONITORING DEVICE, PLANT MONITORING PROGRAM, AND PLANT MONITORING METHOD**

VORRICHTUNG ZUR ÜBERWACHUNG EINER ANLAGE, PROGRAMM ZUR ÜBERWACHUNG EINER ANLAGE UND VERFAHREN ZUR ÜBERWACHUNG EINER ANLAGE

DISPOSITIF DE SURVEILLANCE D'INSTALLATION, PROGRAMME DE SURVEILLANCE D'INSTALLATION ET PROCÉDÉ DE SURVEILLANCE D'INSTALLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.07.2015 Bulletin 2015/30**

(73) Proprietor: **Mitsubishi Hitachi Power Systems, Ltd.**
**Yokohama 220-8401 (JP)**

(72) Inventor: **MIKAMI Naotaka**
**Tokyo 108-8215 (JP)**

(74) Representative: **Henkel, Breuer & Partner**
**Patentanwälte**
**Maximiliansplatz 21**
**80333 München (DE)**

(56) References cited:
| | |
|---|---|
| **EP-A1- 2 187 283** | **EP-A2- 1 014 191** |
| **WO-A1-2009/104725** | **JP-A- 2000 171 956** |
| **JP-A- 2010 181 188** | **JP-A- 2010 191 641** |
| **JP-A- 2012 067 757** | **US-A- 6 117 601** |
| **US-A1- 2002 193 891** | **US-A1- 2003 149 547** |
| **US-A1- 2008 312 873** | |

## Description

Technical Field

The present invention relates to a plant monitoring device, a plant monitoring program, and a plant monitoring method which monitor an operation state of a plant.

Background Art

In various plants, such as a gas turbine power plant, a nuclear power plant, and a chemical plant, in order to monitor whether or not the plant is operating normally, the state quantity of each evaluation item of the plant, such as temperature or pressure, is acquired, and the operation state of the plant is monitored based on these state quantities.
When monitoring the operation state of a plant having multiple evaluation items, for example, in a technique described in PTL 1, the Mahalanobis-Taguchi method (hereinafter, referred to as the MT method) is used. The MT method is a method in which a unit space configured by a plurality of bundles of state quantities, each of which is a collection of state quantities of respective evaluation items, is prepared in advance, and if a bundle of state quantities is acquired from the plant, the Mahalanobis distance of the bundle of state quantities is calculated based on the unit space, and it is determined whether or not the operation state or the like of the plant is normal according to whether or not the Mahalanobis distance is within a predefined threshold value.
In the method described in PTL 1, in order to cope with secular change or seasonal variation of the plant, each time a bundle of state quantities is acquired from the plant and the Mahalanobis distance of the bundle of state quantities is calculated, some bundles of state quantities among a plurality of bundles of state quantities configuring a unit space to be a determination reference are replaced to update the unit space.

Citation List

Patent Literature

[PTL 1] International Publication No. WO2009/107805
WO 2009/104725 A1 discloses a device for diagnosing a manufacturing facility used for manufacturing products through manufacturing processes. The device diagnoses the manufacturing facility by using the Mahalanobis distance. The device is characterized by including a plurality of measuring means for continuously measuring measurement values indicating the states of the manufacturing processes at predetermined time intervals, a measured values collecting means for collecting measured values for the diagnosis from among the measurement values measured by the measuring means and collecting measured values corresponding to the measurement times different from the actual measurement times by predetermined times.
JP 2010 191641 A discloses a method, a program and a device for plant monitoring, wherein the state of the plant is monitored by using the Mahalanobis distance.
US 2008/312873 A1 discloses a situation analyzing system and a situation analyzing method as well as a batch processing analyzing system and a batch processing analyzing method. A data accumulating section accumulates the data acquired from the monitored object. A reference space forming section forms a reference space based on the data accumulated in the data accumulating section. A data acquiring section acquires the data from the monitored object. A distance calculating section calculates a Mahalanobis distance by inputting the data acquired by the data acquiring section into the reference space formed by the reference space forming section.

Summary of Invention

Technical Problem

The method described in PTL 1 is an excellent method capable of coping with secular change or seasonal variation of the plant. However, in this method, in order to cope with secular change or seasonal variation of the plant, since the unit space is updated each time a bundle of state quantities is acquired from the plant and the Mahalanobis distance of the bundle of state quantities is calculated, the collection period of a plurality of bundles of state quantities configuring the unit space becomes comparatively short. For this reason, in this method, the unit space changes extremely sensitively with change in state of the plant, and even when the operation state should be determined to be abnormal essentially, it may be determined to be normal. For example, when the state of the plant gradually shifts to an abnormal state, even if it can be determined to be abnormal when determining the operation state of the plant based on a unit space including a bundle of state quantities previously acquired at a comparatively distant time from the acquisition time of a bundle of state quantities to be evaluated, the unit space to be a determination reference may sensitively follow change in state of the plant, and the operation state may be determined to be normal.

That is, in the method described in PTL 1, there is a problem in that it is not always possible to determine whether or not the operation state of the plant is normal with high accuracy.

Accordingly, the present invention has focused on the problem in the related art, and an object of the invention is to provide a plant monitoring device, a plant monitoring program, and a plant monitoring method capable of determining the operation state of a plant with high accuracy while coping witch secular change or seasonal variation of the plant.

Solution to Problem

In order to solve the above-described problem, there is provided a plant monitoring device as set out in independent claim 1, a plant monitoring program as set out in independent claim 7, and a plant monitoring method as set out in independent claim 11. Advantageous developments are defined in the dependent claims. Specifically, the invention provides a plant monitoring device which monitors the operation state of a plant having a plurality of evaluation items. The plant monitoring device includes: state quantity acquisition means for acquiring, from the plant, a bundle of state quantities which is a collection of state quantities of the respective evaluation items; state quantity storage means in which the state quantity acquisition means stores the bundle of state quantities; unit space storage means for storing a unit space configured by a plurality of bundles of state quantities; state quantity extraction means for extracting, at every predefined evaluation cycle, a bundle of state quantities to be evaluated from the state quantity storage means; Mahalanobis distance calculation means for calculating, at every evaluation cycle, the Mahalanobis distance of the bundle of state quantities extracted by the state quantity extraction means based on the unit space stored in the unit space storage means; determination means for determining, at every evaluation cycle, whether or not the operation state of the plant is normal according to whether or not the Mahalanobis distance calculated by the Mahalanobis distance calculation means is within a predetermined threshold value; and unit space update means for adding the bundle of state quantities extracted by the state quantity extraction means to the unit space stored in the unit space storage means while deleting the oldest bundle of state quantities from the unit space at a predefined update cycle longer than the evaluation cycle.

In the plant monitoring device, since the unit space to be a reference for determination of normality or abnormality is appropriately updated at every update cycle, it is possible to determine the operation state of the plant while coping with secular change or seasonal variation of the plant.

In the plant monitoring device, since the unit space is not updated at every evaluation time, and the unit space is updated at every update cycle longer than the evaluation cycle, it is possible to extend the collection period of the bundles of state quantities configuring the unit space compared to a case where the unit space is updated at every evaluation time. Accordingly, in the plant monitoring device, it is possible to avoid a situation in which the unit space changes sensitively with change in state of the plant, and the operation state is determined to be abnormal even if it should be determined to be normal essentially, or conversely, the operation state is determined to be normal even if it should be determined to be abnormal essentially.

Therefore, in the plant monitoring device, it is possible to determine the operation state of a plant with high accuracy while coping with secular change or seasonal variation of the plant.

The unit space update means may set a cycle, which is a multiple of a natural number (equal to or greater than 2) of the evaluation cycle as an update cycle, and may add the bundle of state quantities extracted by the state quantity extraction means to the unit space stored in the unit space storage means while deleting the oldest bundle of state quantities from the unit space at the evaluation cycle and the update cycle.

The above-described plant monitoring device may further include unit space initial setting means for, when the unit space is not stored in the unit space storage means, extracting the bundle of state quantities from the plurality of bundles of state quantities stored in the state quantity storage means until the number of bundles of state quantities capable of configuring the unit space is reached, and storing the bundle of state quantities in the unit space storage means.

In the plant monitoring device, when a unit space is not stored in the unit space storage means, for example, when the plant monitoring device starts a monitoring operation and starts to acquire a bundle of state quantities from the plant, or the like, basically, the acquired bundle of state quantities is successively accumulated as a part of a plurality of bundles of state quantities configuring a unit space until the number of bundles of state quantities configuring the unit space is reached, whereby it is possible to set a unit space over an extremely short period of time. For this reason, in the plant monitoring device, if the plant monitoring device starts the monitoring operation, it is possible to determine the operation state based on the unit space over a short period of time.

In the above-described plant monitoring device, it is preferable that, if the determination means determines that the Mahalanobis distance relating to the bundle of state quantities extracted by the state quantity extraction means is not within the predetermined threshold value, the unit space update means does not add the bundle of state quantities to the unit space stored in the unit space storage means and does not delete the oldest bundle of state quantities from the unit space even at the update cycle.

In the plant monitoring device, even if the update time is reached, when it is determined that the bundle of state quantities to be evaluated is abnormal, the unit space is not updated. Therefore, it is possible to prevent a bundle of state quantities which is determined to be abnormal from being included in a unit space to be a reference for determination of normality or abnormality.

In the above-described plant monitoring device, the unit space storage means stores, for each of a plurality of groups of the plurality of evaluation items, an intra-group unit space configured by a plurality of intra-group bundles, each of which is a collection of state quantities of respective evaluation items in the group, and may store, for each of a plurality of intra-group unit spaces, an MD unit space configured by the Mahalanobis distances of a plurality of intra-group bundles configuring the intra-group unit space based on the intra-group unit space; the Mahalanobis distance calculation means calculates the Mahalanobis distance based on the intra-group unit space corresponding to the group among the plurality of intra-group unit spaces stored in the unit space storage means as an intra-group Mahalanobis distance with respect to the plurality of intra-group bundles configuring the bundle of state quantities to be evaluated extracted by the state quantity extraction means, and calculates a whole Mahalanobis distance, which is the Mahalanobis distance of a collection of a plurality of intra-group Mahalanobis distances, based on the MD unit space; the determination means determines whether or not the operation state of the plant is normal according to whether or not the whole Mahalanobis distance is within the predetermined threshold value; when the evaluation cycle and the update cycle are reached, the unit space update means adds the bundle of state quantities in the group out of the bundle of state quantities extracted by the state quantity extraction means to each intra-group unit space stored in the unit space storage means while deleting the oldest intra-group bundle in the group from the intra-group unit space; and if a plurality of new intra-group unit spaces are stored in the unit space storage means, the Mahalanobis distance calculation means calculates, for each of the plurality of intra-group unit spaces, the intra-group Mahalanobis distances of the plurality of intra-group bundles configuring the intra-group unit space based on the intra-group unit space, and creates the MD unit space which is the collection of the plurality of intra-group Mahalanobis distances.

In the plant monitoring device, similarly to the above-described plant monitoring device, it is possible to determine the operation state of a plant with high accuracy while coping with secular change or seasonal variation of the plant. In the plant monitoring device, it is possible to reduce the number of state quantities configuring the unit space to be a reference when calculating the intra-group Mahalanobis distance, and even if the intra-group Mahalanobis distance is calculated for each group, it is possible to significantly reduce the computation load when calculating the Mahalanobis distance.

The above-described plant monitoring device may further include unit space initial setting means for, when the intra-group unit space of each of the plurality of groups is not stored in the unit space storage means, extracting the intra-group bundle from the plurality of bundles of state quantities stored in the state quantity storage means until the number of intra-group bundles capable of configuring the intra-group unit space is reached and storing the intra-group bundle in the unit space storage means, and if the intra-group bundles corresponding to the number capable of configuring the intra-group unit space are stored in the unit space storage means, the unit space initial setting means may cause the Mahalanobis distance calculation means to calculate, for each of the plurality of intra-group unit spaces, the intra-group Mahalanobis distances of the plurality of intra-group bundles configuring the intra-group unit space based on the intra-group unit space and to create the MD unit space which is the collection of the plurality of intra-group Mahalanobis distances.

In the plant monitoring device, when an intra-group unit space is not stored in the unit space storage means, for example, when the plant monitoring device starts a monitoring operation and starts to acquire a bundle of state quantities from the plant, or the like, basically, the acquired bundle of state quantities is successively accumulated as a part of a plurality of bundles of state quantities configuring the intra-group unit space until the number of bundles of state quantities configuring the intra-group unit space is reached, whereby it is possible to set an intra-group unit space over an extremely short period of time.

The above-described plant monitoring device may further include evaluation cycle change means for changing the evaluation cycle or update cycle change means for changing the update cycle.

In the plant monitoring device, even when the operation conditions or the like of the plant are rapidly changed, the evaluation cycle or the update cycle can be shortened to thereby cope with the change in the operation conditions over a short period of time.

In order to solve the above-described problem, the invention provides a plant monitoring program which monitors the operation state of a plant having a plurality of evaluation items. The plant monitoring program causes a computer to execute: a state quantity extraction step of extracting, at every predefined evaluation cycle, a bundle of state quantities to be evaluated from a state quantity file of a storage unit of the computer, in which a bundle of state quantities which is a collection of state quantities of the respective evaluation items acquired from the plant is stored in time series; a Mahalanobis distance calculation step of calculating, at every evaluation cycle, the Mahalanobis distance of the bundle of state quantities extracted in the state quantity extraction step based on a unit space stored in a unit space file of the storage unit and configured by a plurality of bundles of state quantities; a determination step of determining, at every evaluation cycle, whether or not the operation state of the plant is normal according to whether or not the Mahalanobis distance calculated in the Mahalanobis distance calculation step is within a predetermined threshold value; and a unit space update step of adding the bundle of state quantities extracted in the state quantity extraction step to the unit space stored in the unit space file while deleting the oldest bundle of state quantities from the unit space at a predefined update cycle longer than the evaluation cycle.

In the plant monitoring program, the plant monitoring program is installed on a computer, whereby, similarly to the above-described plant monitoring device, it is possible to determine the operation state of a plant with high accuracy while coping with secular change or seasonal variation of the plant.

The plant monitoring program may cause the computer to execute a state quantity acquisition step of acquiring a bundle of state quantities, which is a collection of state quantities of the respective evaluation items, from the plant and storing the bundle of state quantities in the state quantity file.

The above-described plant monitoring program may cause the computer to execute a unit space initial setting step of, when the unit space is not stored in the unit space file, extracting the bundle of state quantities from the plurality of bundles of state quantities stored in the state quantity file until the number of bundles of state quantities capable of configuring the unit space is reached, and storing the bundle of state quantities in the unit space file.

In the plant monitoring program, when a unit space is not stored in the unit space file, for example, when a plant monitoring operation starts and a bundle of state quantities starts to be acquired from the plant, or the like, basically, the acquired bundle of state quantities is successively accumulated as a part of a plurality of bundles of state quantities configuring a unit space until the number of bundles of state quantities configuring the unit space is reached, whereby it is possible to set a unit space over an extremely short period of time.

In the plant monitoring program, the unit space file stores, for each of a plurality of groups of the plurality of evaluation items, an intra-group unit space configured by a plurality of intra-group bundles, each of which is a collection of state quantities of respective evaluation items in the group, and stores, for each of a plurality of intra-group unit spaces, an MD unit space configured by the Mahalanobis distances of a plurality of intra-group bundles configuring the intra-group unit space based on the intra-group unit space; in the Mahalanobis distance calculation step, the Mahalanobis distance based on the intra-group unit space corresponding to the group among the plurality of intra-group unit spaces stored in the unit space file is calculated as an intra-group Mahalanobis distance with respect to the plurality of intra-group bundles configuring the bundle of state quantities to be evaluated extracted in the state quantity extraction step, and a whole Mahalanobis distance, which is the Mahalanobis distance of a collection of a plurality of intra-group Mahalanobis distances, is calculated based on the MD unit space; in the determination step, it is determined whether or not the operation state of the plant is normal according to whether or not the whole Mahalanobis distance is within the predetermined threshold value; in the unit space update step, when the update cycle is reached, the bundle of state quantities in the group out of the bundle of state quantities extracted in the state quantity extraction step is added to each intra-group unit space stored in the unit space file while the oldest intra-group bundle in the group is deleted from the intra-group unit space; and in the Mahalanobis distance calculation step, if a plurality of new intra-group unit spaces are stored in the unit space file, for each of the plurality of intra-group unit spaces, the intra-group Mahalanobis distances of the plurality of intra-group bundles configuring the intra-group unit space is calculated based on the intra-group unit space and the MD unit space which is the collection of the plurality of intra-group Mahalanobis distances is created.

In the plant monitoring program, similarly to the above-described plant monitoring program, it is possible to determine the operation state of a plant with high accuracy while coping with secular change or seasonal variation of the plant. In the plant monitoring program, it is possible to reduce the number of state quantities configuring the unit space to be a reference when calculating the intra-group Mahalanobis distance, and even if the intra-group Mahalanobis distance is calculated for each group, it is possible to significantly reduce the computation load when calculating the Mahalanobis distance.

The plant monitoring program may cause the computer to execute a unit space initial setting step of, when the intra-group unit space of each of the plurality of groups is not stored in the unit space file, extracting the intra-group bundle from the plurality of bundles of state quantities stored in the state quantity file until the number of intra-group bundles capable of configuring the intra-group unit space is reached and storing the intra-group bundle in the unit space file, and in the unit space initial setting step, if the intra-group bundles corresponding to the number capable of configuring the intra-group unit space are stored in the unit space file, in the Mahalanobis distance calculation step, for each of the plurality of intra-group unit spaces, the intra-group Mahalanobis distances of the plurality of intra-group bundles configuring the intra-group unit space may be calculated based on the intra-group unit space, and the MD unit space which is the collection of the plurality of intra-group Mahalanobis distances may be created.

In the plant monitoring program, when an intra-group unit space is not stored in the unit space file, for example, when the plant monitoring operation starts and a bundle of state quantities starts to be acquired from the plant, or the like, basically, the acquired bundle of state quantities is successively accumulated as a part of a plurality of bundles of state quantities configuring the intra-group unit space until the number of bundles of state quantities configuring the intra-group unit space is reached, whereby it is possible to set an intra-group unit space over an extremely short period of time.

In order to solve the above-described problem, the invention provides a plant monitoring method which monitors the operation state of a plant having a plurality of evaluation items. The plant monitoring method executes: a state quantity acquisition step of acquiring a bundle of state quantities, which is a collection of state quantities of the respective evaluation items, from the plant and storing the bundle of state quantities in a state quantity file; a state quantity extraction step of extracting a bundle of state quantities to be evaluated from the state quantity file at every predefined evaluation cycle; a Mahalanobis distance calculation step of calculating, at every evaluation cycle, the Mahalanobis distance of the bundle of state quantities extracted in the state quantity extraction step based on a unit space stored in a unit space file and configured by a plurality of bundles of state quantities; a determination step of determining, at every evaluation cycle, whether or not the operation state of the plant is normal according to whether or not the Mahalanobis distance calculated in the Mahalanobis distance calculation step is within a predetermined threshold value; and a unit space update step of adding the bundle of state quantities extracted in the state quantity extraction step to the unit space stored in the unit space file while deleting the oldest bundle of state quantities from the unit space at a predefined update cycle longer than the evaluation cycle.

In the plant monitoring method, similarly to the above-described plant monitoring device, it is possible to determine the operation state of a plant with high accuracy while coping with secular change or seasonal variation of the plant.

The plant monitoring method may further execute a unit space initial setting step of, when the unit space is not stored in the unit space file, extracting the bundle of state quantities from the plurality of bundles of state quantities stored in the state quantity file until the number of bundles of state quantities capable of configuring the unit space is reached and storing the bundle of state quantities in the unit space file.

In the plant monitoring method, when a unit space is not stored in the unit space file, for example, when a plant monitoring operation starts and a bundle of state quantities starts to be acquired from the plant, or the like, basically, the acquired bundle of state quantities is successively accumulated as a part of a plurality of bundles of state quantities configuring a unit space until the number of bundles of state quantities configuring the unit space is reached, whereby it is possible to set a unit space over an extremely short period of time.

In the plant monitoring method, the unit space file stores, for each of a plurality of groups of the plurality of evaluation items, an intra-group unit space configured by a plurality of intra-group bundles, each of which is a collection of state quantities of respective evaluation items in the group, and stores, for each of a plurality of intra-group unit spaces, an MD unit space configured by the Mahalanobis distances of a plurality of intra-group bundles configuring the intra-group unit space based on the intra-group unit space; in the Mahalanobis distance calculation step, the Mahalanobis distance based on the intra-group unit space corresponding to the group among the plurality of intra-group unit spaces stored in the unit space file is calculated as an intra-group Mahalanobis distance with respect to the plurality of intra-group bundles configuring the bundle of state quantities to be evaluated extracted in the state quantity extraction step, and a whole Mahalanobis distance, which is the Mahalanobis distance of a collection of a plurality of intra-group Mahalanobis distances, is calculated based on the MD unit space; in the determination step, it is determined whether or not the operation state of the plant is normal according to whether or not the whole Mahalanobis distance is within the predetermined threshold value; in the unit space update step, when the update cycle is reached, the bundle of state quantities in the group out of the bundle of state quantities extracted in the state quantity extraction step is added to each intra-group unit space stored in the unit space file while the oldest intra-group bundle in the group may be deleted from the intra-group unit space; and in the Mahalanobis distance calculation step, if a plurality of new intra-group unit spaces are stored in the unit space file, for each of the plurality of intra-group unit spaces, the intra-group Mahalanobis distances of the plurality of intra-group bundles configuring the intra-group unit space is calculated based on the intra-group unit space, and the MD unit space which is the collection of the plurality of intra-group Mahalanobis distances is created.

In the plant monitoring method, similarly to the above-described plant monitoring method, it is possible to determine the operation state of a plant with high accuracy while coping with secular change or seasonal variation of the plant. In the plant monitoring method, it is possible to reduce the number of state quantities configuring the unit space to be a reference when calculating the intra-group Mahalanobis distance, and even if the intra-group Mahalanobis distance is calculated for each group, it is possible to significantly reduce the computation load when calculating the Mahalanobis distance.

The plant monitoring method may further execute a unit space initial setting step of, when the intra-group unit space of each of the plurality of groups is not stored in the unit space file, extracting the intra-group bundle from the plurality of bundles of state quantities stored in the state quantity file until the number of intra-group bundles capable of configuring the intra-group unit space is reached and storing the intra-group bundle in the unit space file, and in the unit space initial setting step, if the intra-group bundles corresponding to the number capable of configuring the intra-group unit space are stored in the unit space file, in the Mahalanobis distance calculation step, for each of the plurality of intra-group unit spaces, the intra-group Mahalanobis distances of the plurality of intra-group bundles configuring the intra-group unit space may be calculated based on the intra-group unit space, and the MD unit space which is the collection of the plurality of intra-group Mahalanobis distances may be created.

In the plant monitoring method, when an intra-group unit space is not stored in the unit space file, for example, when the plant monitoring operation starts and a bundle of state quantities starts to be acquired from the plant, or the like, basically, the acquired bundle of state quantities is successively accumulated as a part of a plurality of bundles of state quantities configuring the intra-group unit space until the number of bundles of state quantities configuring the intra-group unit space is reached, whereby it is possible to set an intra-group unit space over an extremely short period of time.

Advantageous Effects of Invention

According to the invention, it is possible to determine the operation state of a plant with high accuracy while coping with secular change or seasonal variation of the plant.

Brief Description of Drawings

Fig. 1 is an explanatory view showing the configuration of a gas turbine power plant and a plant monitoring device according to a first embodiment of the invention.

Fig. 2 is an explanatory view showing the data configuration of a state quantity file according to the first embodiment of the invention.

Fig. 3 is an explanatory view showing the data configuration of a unit space file according to the first embodiment of the invention.

Fig. 4 is a conceptual diagram showing the concept of a Mahalanobis distance.

Fig. 5 is a flowchart (first view) showing the operation of the plant monitoring device according to the first embodiment of the invention.

Fig. 6 is a flowchart (second view) showing the operation of the plant monitoring device according to the first embodiment of the invention.

Fig. 7 is an explanatory view showing the relationship between an evaluation cycle and an update cycle, and transition of a collection period of a plurality of bundles of state quantities configuring a unit space according to the first embodiment of the invention.

Fig. 8 is a conceptual diagram showing the concept of processing through to operation state determination processing according to a second embodiment of the invention.

Fig. 9 is a conceptual diagram showing the concept of an intra-group unit space and an MD unit space according to the second embodiment of the invention.

Fig. 10 is a flowchart (first view) showing the operation of a plant monitoring device according to the second embodiment of the invention.

Fig. 11 is a flowchart (second view) showing the operation of the plant monitoring device according to the second embodiment of the invention.

Description of Embodiments

Hereinafter, embodiments of the invention will be described referring to the drawings.

(First Embodiment)

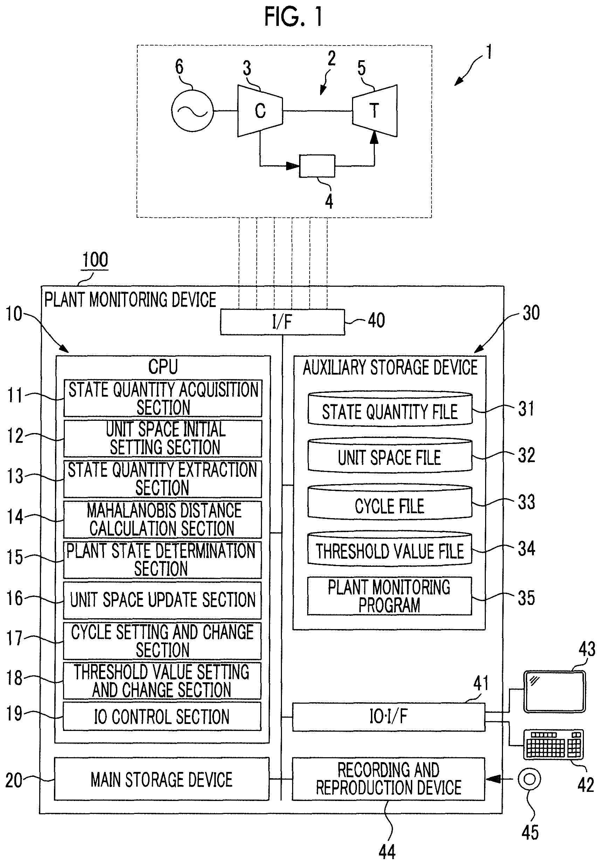

First, a first embodiment of the invention will be described referring to Figs. 1 to 7.

As shown in Fig. 1, a plant monitoring device 100 of this embodiment monitors the operation state of a gas turbine power plant 1. The gas turbine power plant 1 includes a gas turbine 2, and a power generator 6 which generates power by the driving of the gas turbine 2. The gas turbine 2 includes a compressor 3 which produces compressed air, a combustor 4 which mixes and combusts fuel and compressed air to produce combustion gas, and a turbine 5 which is rotationally driven by combustion gas. The rotor of the turbine 5 is connected to the power generator 6 through the compressor 3, and the power generator 6 generates power by the rotation of the rotor.

The plant monitoring device 100 acquires the state quantity of each of a plurality of evaluation items of the gas turbine power plant 1, and determines whether or not the operation state of the gas turbine power plant 1 is normal based on these state quantities. The plant monitoring device 100 basically monitors the operation state of the gas turbine power plant 1 using the Mahalanobis-Taguchi method (hereinafter, referred to as the MT method). The evaluation items of the gas turbine power plant 1 are, for example, gas turbine output, cavity temperature at a plurality of places between the turbine rotor and the stationary part, blade path temperature at a plurality of places in a circumferential direction at the gas outlet of the turbine, displacement of the turbine rotor at a plurality of places in the circumferential direction, the opening of various valves provided in the gas turbine, and the like. The gas turbine power plant 1 is provided with various state quantity detection means, such as sensors, in order to detect these state quantities.

The plant monitoring device 100 is a computer, and includes a CPU 10 which executes various kinds of arithmetic processing, a main storage device 20, such as a RAM, which serves as a work area of the CPU 10, or the like, an auxiliary storage device 30, such as a hard disk drive, which stores various kinds of data or programs, a recording and reproduction device 44 which records or reproduces data on a disk type storage medium 45, such as a CD or a DVD, an input device 42, such as a keyboard or a mouse, a display device 43, an input/output interface 41 of the input device 42 or the display device 43, and an interface 40 which is connected to various state quantity detection means of the gas turbine power plant 1.

Various programs, such as a plant monitoring program 35 for causing the computer to function as the plant monitoring device 100 and an OS program, are stored in the auxiliary storage device 30 in advance. Various programs including the plant monitoring program 35 are loaded from the disk type storage medium 45 to the auxiliary storage device 30 through the recording and reproduction device 44. These programs may be loaded from an external device to the auxiliary storage device 30 through a portable memory, such as a flash memory, or a communication device (not shown).

In the auxiliary storage device 30, the following files are provided in an execution process of the plant monitoring program 35. That is, a state quantity file (state quantity storage means) 31 in which the state quantity of each of a plurality of evaluation items of the gas turbine power plant 1 is stored, a unit space file (unit space storage means) 32 in which data of a unit space to be a reference when determining the operation state of the plant is stored, a cycle file 33 in which various cycles, such as an evaluation cycle for evaluating the state quantity of each evaluation item, are stored, and a threshold value file 34 in which a threshold value for use in determining the operation state or the like is stored are provided in the auxiliary storage device 30.

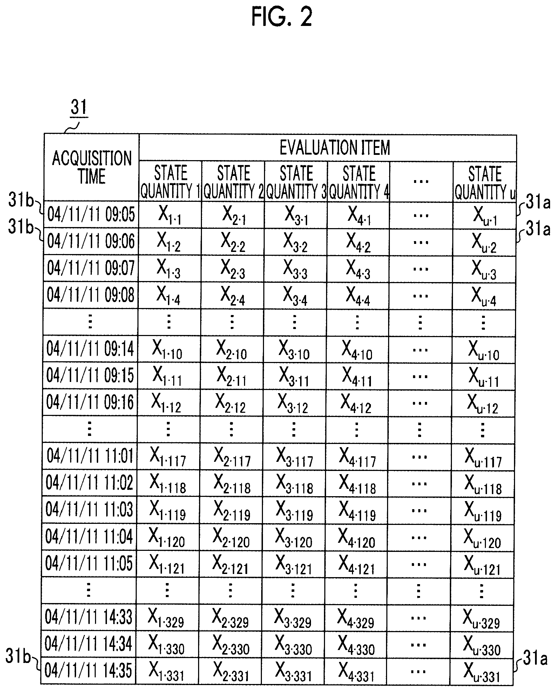

As shown in Fig. 2, in the state quantity file (state quantity storage means) 31, a bundle 31a of state quantities which is a collection of state quantities of the respective evaluation items of the gas turbine power plant 1 is stored in time series at every state quantity acquisition time 31b in the execution process of the plant monitoring program 35. For example, the state quantity of each of 100 evaluation items (state quantity 1, state quantity 2, ..., state quantity u (= 100)) is acquired as the bundle 31a of state quantities at one-minute intervals (acquisition cycle) from 9:05 on April 11, 2011, and these bundles 31a of state quantities are stored in time series.

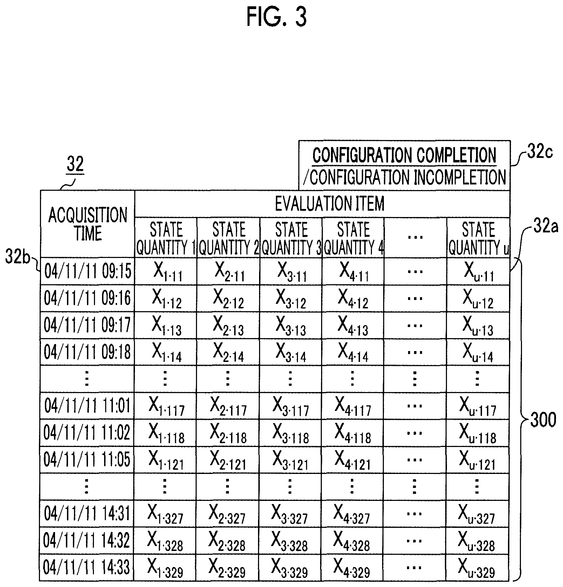

As shown in Fig. 3, in the unit space file (unit space storage means) 32, a bundle 32a of state quantities extracted from a plurality of bundles of state quantities stored in the state quantity file 31 is stored along with the acquisition time 32b of each bundle 32a of state quantities in the execution process of the plant monitoring program 35.

The CPU 10 functionally has a state quantity acquisition section 11 which acquires the state quantity of each of the plurality of evaluation items of the gas turbine power plant 1 at every acquisition cycle described above and stores the state quantity in the state quantity file 31, a unit space initial setting section 12 which, when data configuring a unit space is not stored in the unit space file 32, extracts data capable of configuring the unit space from the state quantity file 31 and stores the data in the unit space file 32, a state quantity extraction section 13 which extracts a bundle of state quantities from the state quantity file 31 at every predefined evaluation cycle, a Mahalanobis distance calculation section 14 which calculates the Mahalanobis distance of the bundle of state quantities extracted by the state quantity extraction section 13 based on the unit space stored in the unit space file 32, a plant state determination section 15 which determines whether or not the operation state of the gas turbine power plant 1 is normal according to whether or not the Mahalanobis distance calculated by the Mahalanobis distance calculation section 14 is within a predetermined threshold value, a unit space update section 16 which updates the unit space stored in the unit space file 32, a cycle setting and change section 17 which sets and changes various cycles stored in the cycle file 33, a threshold value setting and change section 18 which sets and changes various threshold values stored in the threshold value file 34, and an IO control section 19 which controls input/output on the computer.

Of the functional components of the CPU 10 described above, all of the state quantity acquisition section 11, the unit space initial setting section 12, the state quantity extraction section 13, the Mahalanobis distance calculation section 14, the plant state determination section 15, the unit space update section 16, the cycle setting and change section 17, and the threshold value setting and change section 18 function when the CPU 10 executes the plant monitoring program 35 and the like stored in the auxiliary storage device 30. The IO control section 19 functions when the CPU 10 executes the OS program and the like stored in the auxiliary storage device 30.

Next, the monitoring operation of the plant monitoring device 100 of this embodiment will be described.

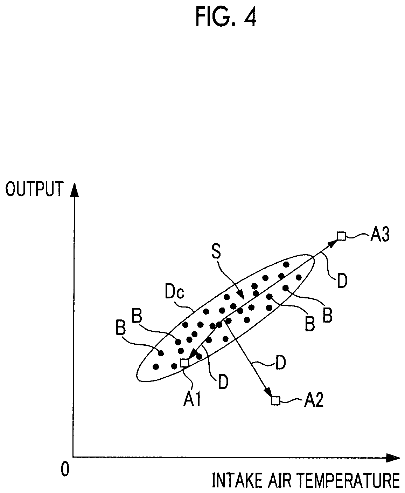

As described above, the plant monitoring of the plant monitoring device 100 uses the MT method. Accordingly, the basic contents of the plant monitoring method by the MT method will be described referring to Fig. 4.

The output of the power generator 6 and the intake air temperature of the compressor 3 of the gas turbine power plant 1 are respectively referred to as state quantities, and a combination of the output of the power generator 6 and the intake air temperature of the compressor 3 is referred to as a bundle B of state quantities. In the MT method, a collection of a plurality of bundles B of state quantities, that is, an aggregate of bundles B of state quantities is defined as a unit space S, and the Mahalanobis distance D of a bundle A of state quantities to be evaluated for evaluating whether or not the operation state is abnormal is calculated based on the unit space S. The Mahalanobis distance D becomes a greater value as the degree of abnormality of a monitoring target becomes greater. Accordingly, in the MT method, it is determined whether or not the operation state of the plant is abnormal according to whether or not the Mahalanobis distance D is within a predefined threshold value Dc. In Fig. 4, a solid line surrounding the unit space S represents a position where the Mahalanobis distance D becomes the threshold value Dc. For example, since a bundle A1 of state quantities to be evaluated has the Mahalanobis distance D equal to or less than the threshold value Dc, it is determined that the operation state of the gas turbine power plant 1 is normal when the bundle A1 of state quantities is acquired. Since bundles A2 and A3 of state quantities to be evaluated have the Mahalanobis distance D greater than the threshold value Dc, it is determined that the operation state of the gas turbine power plant 1 is abnormal when these bundles A2 and A3 of state quantities are acquired.

The mean value of the Mahalanobis distances of a plurality of bundles B of state quantities configuring the unit space S is 1. When the operation state of the gas turbine power plant 1 is normal, the Mahalanobis distance D of the bundle A of state quantities to be evaluated is substantially kept to be equal to or less than 4. It is preferable that the threshold value Dc regarding the Mahalanobis distance D is set to, for example, a value greater than the maximum Mahalanobis distance among the Mahalanobis distances of a plurality of bundles B of state quantities configuring the unit space S. At this time, it is preferable that the threshold value Dc is defined in consideration of the inherent characteristics of the gas turbine power plant 1, or the like.

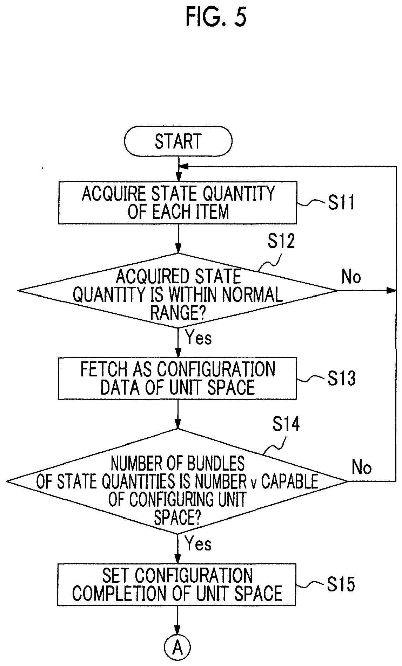

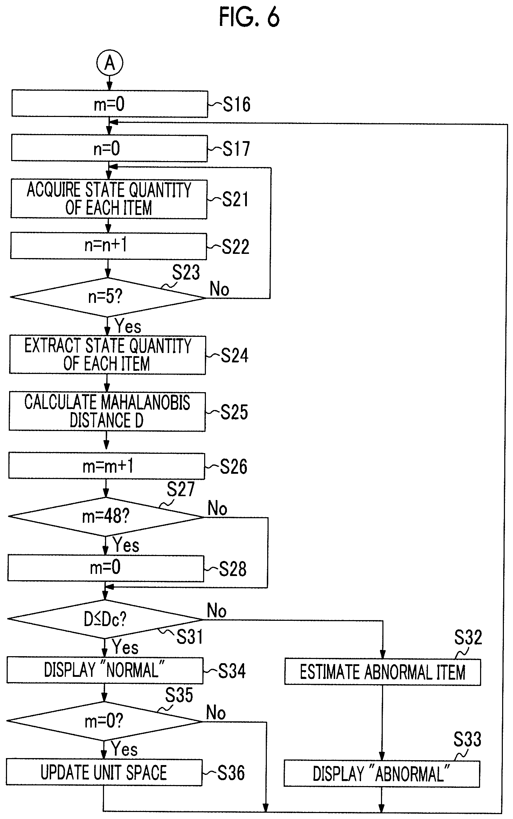

Next, the specific monitoring operation of the plant monitoring device 100 of this embodiment will be described referring to the flowcharts of Figs. 5 and 6. It is assumed that no data is stored in the state quantity file 31 and the unit space file 32 before the monitoring operation by the plant monitoring device 100 starts. It is assumed that various cycles or various threshold values are set and registered through the operation of the input device 42 by an operator of the plant monitoring device 100 before the monitoring operation starts. During the setting and registration, the cycle setting and change section 17 or the threshold value setting and change section 18 functions, and various cycles or various threshold values designated by the operator are set and registered in the cycle file 33 or the threshold value file 34.

If the gas turbine power plant 1 starts to be activated, and various state quantity detection means of the gas turbine power plant 1 start to detect various state quantities, the state quantity acquisition section 11 acquires the state quantity of each of the plurality of evaluation items at every acquisition cycle (for example, one-minute cycle) and stores the state quantity in the state quantity file 31 (S11). The state quantity acquisition section 11 acquires the state quantity of each of the plurality of evaluation items from the gas turbine power plant 1 if the acquisition time is reached, and stores these state quantities in the state quantity file 31 (Fig. 2) as a bundle of state quantities in association with the acquisition time.

If a new bundle of state quantities is stored in the state quantity file 31, the unit space initial setting section 12 determines whether or not each state quantity configuring the new bundle of state quantities is within a normal range (S12). At this time, the unit space initial setting section 12 uses a value representing the normal range of each state quantity stored in advance in the threshold value file 34. When the unit space initial setting section 12 determines that any state quantity configuring the new bundle of state quantities is out of the normal range, the processing returns to Step 11. When it is determined that all state quantities configuring the new bundle of state quantities are within the normal range, the unit space initial setting section 12 stores the bundle of state quantities in the unit space file 32 (Fig. 3) as configuration data of a unit space in association with the acquisition time of the bundle of state quantities (S13). The determination processing of Step 12 may be performed by the operator. In this case, the operator determines whether or not each state quantity configuring the new bundle of state quantities is within the normal range based on design data or operation results of the gas turbine power plant 1. When all state quantities configuring the new bundle of state quantities are determined to be within the normal range, the operator inputs, to the unit space initial setting section 12, information to the effect that the bundle of state quantities is within the normal range. The unit space initial setting section 12 executes the processing of Step 13 based on this information.

Next, the unit space initial setting section 12 determines whether or not the number of bundles of state quantities stored in the unit space file 32 is a number v capable of configuring a unit space (S14). It is preferable that the number v of bundles of state quantities configuring a unit space is three times the number of items of state quantities from the viewpoint of quality engineering. Since the number of items of state quantities, that is, the number u of evaluation items is 100, the number v of bundles of state quantities configuring a unit space is 300 (= 100 × 3). For this reason, it is determined whether or not the number of bundles of state quantities stored in the unit space file 32 is 300.

When the number of bundles of state quantities stored in the unit space file 32 does not reach the number v capable of configuring a unit space, the processing returns to Step 11, and the acquisition of the state quantity of each item is executed. When the number of bundles of state quantities stored in the unit space file 32 is the number v capable of configuring a unit space, as shown in Fig. 3, the unit space initial setting section 12 recognizes that the initial setting processing of the unit space is completed, and sets "configuration completion" 32c to the effect that a unit space has been configured in the unit space file 32 (S15).

In the example shown in Fig. 2, bundles of state quantities acquired at the acquisition times 9:05 to 9:14, 11:03, and 11:04 on April 11, 2011 are bundles including state quantities which are determined in Step 12 to be out of the normal range, and thus, are not stored in the unit space file 32 shown in Fig. 3. The bundles of state quantities excluding the bundles of state quantities determined to be out of the normal range in the state quantity file 31 are stored in the unit space file 32 shown in Fig. 3.

If information to the effect that a unit space has been configured is set (S15), the unit space update section 16 sets a value m of an update time counter to 0 (S16 in Fig. 6), and the state quantity extraction section 13 sets a value n of an evaluation time counter to 0 (S17).

After the value n of the evaluation time counter is set to 0 (S17), if a new acquisition time is reached, similarly to the processing in Step 11 described above, the state quantity acquisition section 11 acquires the state quantity of each of the plurality of evaluation items from the gas turbine power plant 1 and stores these state quantities in the state quantity file 31 as a bundle of state quantities in association with the acquisition time (S21).

If the state quantity acquisition section 11 acquires the bundle of state quantities (S21), the state quantity extraction section 13 adds 1 to the value n of the evaluation time counter (S22), and it is determined whether or not the value n of the evaluation time counter becomes, for example, 5 (S23). If the value n of the evaluation time counter is not 5, it is recognized that the evaluation time is not yet reached, and the processing returns to Step 21. That is, until the value n of the evaluation time counter becomes 5, the acquisition of a bundle of state quantities by the state quantity acquisition section 11 is repeatedly executed. If it is determined that the value n of the evaluation time counter becomes 5, the state quantity extraction section 13 recognizes that the evaluation time of the state quantity is reached, and extracts the latest bundle of state quantities from the state quantity file 31 as a bundle of state quantities to be evaluated (S24). That is, since the acquisition cycle of a bundle of state quantities from the gas turbine power plant 1 by the state quantity acquisition section 11 is 1 minute, the evaluation cycle of the state quantity is 5 minutes, and the evaluation time of the state quantity comes every 5 minutes.

If the state quantity extraction section 13 extracts the bundle of state quantities to be evaluated (S24), the Mahalanobis distance calculation section 14 calculates the Mahalanobis distance D of the bundle of state quantities by the following method (S25).

The Mahalanobis distance calculation section 14 first acquires an aggregate of bundles of state quantities configuring a unit space from the unit space file 32 and calculates the mean value Mi and the standard deviation σi (the degree of variation of reference data) of each of the variables X1 to Xu, which are the state quantities of the respective evaluation items, by Expressions (1) and (2). Note that i is an evaluation item number (natural number) and has a value of 1 to u. Note that u matches the number of evaluation items, and is 100. Furthermore, j is the number (natural number) of a bundle of state quantities and has a value of 1 to v. Note that v matches the number of bundles of state quantities configuring a unit space and is 300. The standard deviation is the positive square root of an expected value which is the square of the difference between the state quantities and the mean value thereof.

[Expression 1]

$$M_i = \frac{1}{v} \sum_{j=1}^{v} X_{ij} \qquad \cdots\cdots (1)$$

[Expression 2]

$$\sigma_i = \sqrt{\frac{1}{v-1} \sum_{j=1}^{v} \left( X_{ij} - M_i \right)^2} \qquad \cdots\cdots (2)$$

Next, the Mahalanobis distance calculation section 14 defines a covariance matrix (correlation matrix) R representing the correlation between the variables X1 to Xu and an inverse matrix $R^{-1}$ of the covariance matrix R by Expression (3). In Expression (3), k is the number of evaluation items and is u (= 100). Furthermore, i or p is an evaluation item number and has a value of 1 to u.

[Expression 3]

$$R = \begin{pmatrix} 1 & r_{12} & \cdots & r_{1k} \\ r_{21} & 1 & \cdots & r_{2k} \\ \vdots & \vdots & \ddots & \vdots \\ r_{k1} & r_{k2} & \cdots & 1 \end{pmatrix}$$

$$R^{-1} = \begin{pmatrix} a_{11} & a_{12} & \cdots & a_{1k} \\ a_{21} & a_{22} & \cdots & a_{2k} \\ \vdots & \vdots & \ddots & \vdots \\ a_{k1} & a_{k2} & \cdots & a_{kk} \end{pmatrix} = \begin{pmatrix} 1 & r_{12} & \cdots & r_{1k} \\ r_{21} & 1 & \cdots & r_{2k} \\ \vdots & \vdots & \ddots & \vdots \\ r_{k1} & r_{k2} & \cdots & 1 \end{pmatrix}^{-1} \quad \cdots\cdots (3)$$

$$r_{ip} = r_{pi} = \frac{1}{v} \sum_{j=1}^{v} X_{ij} X_{pj}$$

Next, the Mahalanobis distance calculation section 14 converts the variables X1 to Xu, which are the state quantities of the bundle of state quantities extracted in Step 24, to x1 to xu using the mean value Mi and the standard deviation σi described above by Expression (4), and standardizes the variables X1 to Xu. That is, the bundle of state quantities of the gas turbine power plant 1 is converted to a random variable with a mean of 0 and a standard deviation of 1. [Expression 4]

$$x_i = (X_i - M_i)/\sigma_i \quad \cdots\cdots (4)$$

Next, the Mahalanobis distance calculation section 14 calculates the Mahalanobis distance D regarding the bundle of state quantities extracted in Step 24 by Expression (5) using the inverse matrix $R^{-1}$ defined by Expression (3) and the random variables x1 to xu regarding the variables X1 to Xu, which are the state quantities of the bundle of state quantities extracted in Step 24. In order to use the mean value Mi and the standard deviation σi regarding the unit space, and the inverse matrix $R^{-1}$ when calculating the Mahalanobis distance of the bundle of state quantities extracted in the next step 24, the Mahalanobis distance calculation section 14 stores the mean value Mi, the standard deviation σi, and the inverse matrix $R^{-1}$ in the auxiliary storage device 30.
[Expression 5]

$$D^2 = \frac{1}{k}(x_1, x_2, \cdots, x_k) \cdot R^{-1} \cdot \begin{pmatrix} x_1 \\ x_2 \\ \vdots \\ x_k \end{pmatrix} \quad \cdots\cdots (5)$$

If the Mahalanobis distance D of the bundle of state quantities extracted in Step 24 is calculated (S25), the unit space update section 16 adds 1 to the value m of the update time counter (S26), and determines whether or not the new value m of the update time counter is, for example, 48 (S27). If the value m of the update time counter is 48, the unit space update section 16 recognizes that the update time of the unit space is reached, resets the value m of the update time counter to 0, and proceeds to Step 31. If the value m of the update time counter is not 48, the unit space update section 16 recognizes that the update time of the unit space is not yet reached, and immediately proceeds to Step 31.
In Step 31, the plant state determination section 15 determines whether or not the Mahalanobis distance D calculated in Step 25 is equal to or less than the threshold value Dc stored in the threshold value file 34. Although the threshold value Dc stored in the threshold value file 34 is used, a value may be calculated separately from a plurality of bundles of state quantities configuring the unit space stored in the unit space file 32. In this case, as described above, for example, a value greater than the maximum Mahalanobis distance among the Mahalanobis distances of a plurality of bundles of state quantities configuring the unit space may be set as the threshold value Dc.

In Step 31, when it is determined that the Mahalanobis distance D is not equal to or less than the threshold value Dc, that is, exceeds the threshold value Dc, the plant state determination section 15 recognizes that the operation state of the gas turbine power plant 1 is abnormal. The plant state determination section 15 estimates the items of abnormal state quantities from the difference between the larger-the-better SN ratios according to the presence/absence of items by, for example, orthogonal table analysis (S32). This is because, while it is possible to determine whether or not there is an abnormality of the operation state from the Mahalanobis distance D, it is not possible to determine a place where an abnormality occurs from the Mahalanobis distance D. Next, the plant state determination section 15 causes the IO control section 19 to display, on the display device 43, information to the effect that the operation state of the gas turbine power plant 1 is abnormal, the items of abnormal state quantities, and the state quantities (S33), and then, returns to Step 17.

In Step 31, when the Mahalanobis distance D is determined to be equal to or less than the threshold value Dc, the plant state determination section 15 recognizes that the operation state of the gas turbine power plant 1 is normal, and causes the IO control section 19 to display, on the display device 43, information to the effect that the operation state of the gas turbine power plant 1 is normal (S34). When the operation state of the gas turbine power plant 1 is normal, it is not absolutely necessary to display information to the effect that the operation state is normal, unlike a case where the operation state is abnormal.

If the information to the effect that the operation state is normal is displayed (S34), the unit space update section 16 determines whether or not the value m of the update time counter is 0 (S35). If it is determined that the value m of the update time counter is 0, the unit space update section 16 updates the unit space stored in the unit space file 32 (S36). At this time, the unit space update section 16 deletes the oldest bundle of state quantities from a plurality of bundles of state quantities configuring the unit space stored in the unit space file 32, while adding the bundle of state quantities for which it is determined that the operation state is normal in Step 31.

When the unit space update section 16 determines in Step 35 that the value m of the update time counter is 0 and updates the unit space (S36), and when the unit space update section 16 determines in Step 35 that the value m of the update time counter is not 0, the processing returns to Step 17.

If the processing returns to Step 17, as described above, a bundle of state quantities which are the state quantities of the respective evaluation items is repeatedly acquired from the gas turbine power plant 1 at each acquisition cycle until the value n of the evaluation time counter becomes a predefined maximum value, for example, 5 after the value n of the evaluation time counter is set to 0 (S21 to S23). If the value n of the evaluation time counter becomes the maximum value, it is recognized that the evaluation time of the state quantity is reached, the latest bundle of state quantities is extracted by the state quantity extraction section 13 from the state quantity file 31 as a bundle of state quantities to be evaluated (S24), and the Mahalanobis distance D of the bundle of state quantities is calculated by the Mahalanobis distance calculation section 14 (S25). Subsequently, it is determined whether or not the operation state is abnormal through comparison of the Mahalanobis distance D and the threshold value Dc by the plant state determination section 15, information to the effect that the operation state is abnormal or normal is displayed (S26 to S28, S31 to S35), and the processing returns to Step 17 again.

The above processing of Step 17, Step 21 to Step 28, and Step 31 to Step 35 is repeated until the value m of the update time counter becomes a predefined maximum value, for example, 48, that is, until 48 evaluation cycles have passed. In the meantime, as described above, the mean value Mi, the standard deviation $\sigma i$, and the inverse matrix $R^{-1}$ calculated in Step 25 of the first routine are stored in the auxiliary storage device 30, and are used when calculating the Mahalanobis distance D in Step 25 of the next and subsequent routines.

If the above processing of Step 17, Step 21 to Step 28, and Step 31 to Step 35 is repeatedly executed, the value m of the update time counter gradually increases from 0 to 48, and 4 hours (= 240 minutes = 5 minutes x 48 times) elapses from when the value m of the update time counter is 0, in Step 28, it is determined by the unit space update section 16 that the value m of the update time counter becomes 48, and if it is recognized that the update time of the unit space is reached, the value m of the update time counter is reset to 0 (S28). If the operation state is determined to be normal in the operation state determination processing (S31), the unit space is updated by the unit space update section 16 (S36).

That is, in this embodiment, the acquisition cycle in which the state quantity acquisition section 11 acquires a bundle of state quantities from the gas turbine power plant 1 is 1 minute, the evaluation cycle in which the operation state is determined based on the bundle of state quantities is 5 minutes, and the update cycle in which the unit space in the unit space file 32 is updated is 4 hours. In this embodiment, even when the update cycle is reached, if it is not determined that the operation state is normal, the unit space is not updated.

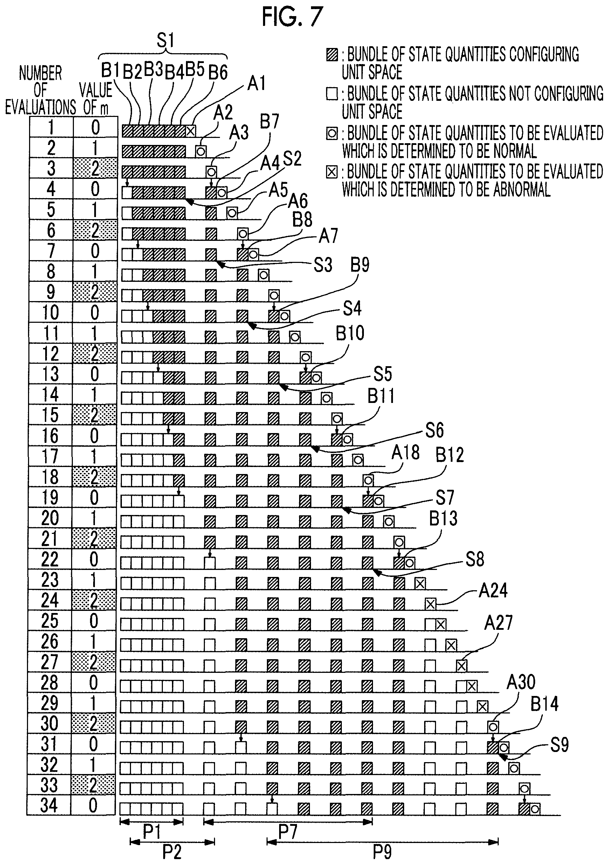

Next, transition of the unit space stored in the unit space file 32 will be described referring to Fig. 7 along with the operation of the plant monitoring device 100. Description will be provided regarding the transition after the configuration completion of the unit space is set in Step 15 of Fig. 5, the value m of the update time counter is set to 0 (S16), and the latest bundle of state quantities is extracted from the state quantity file 31 as a bundle of state quantities to be evaluated (S24).

Fig. 7 is a diagram showing what kind of a unit space is used to evaluate a bundle of state quantities at a certain time. In Fig. 7, a specific row represents a specific time, and it is described on the assumption that the time elapses downward in the drawing. The right direction in a specific row is a future direction, and conversely, the left side is a past direction. In Fig. 7, all rectangles represent bundles of state quantities, hatched rectangles represent bundles of state quantities configuring a unit space, plain rectangles represent bundles of state quantities not configuring a unit space, rectangles with a circle inside represent a bundle of state quantities to be evaluated which is determined to be normal, and rectangles with × inside represent a bundle of state quantities to be evaluated which is determined to be abnormal.

In the example of Fig. 7, six bundles of state quantities configure a unit space. The evaluation cycle is 5 minutes, and the update cycle of the unit space is 15 minutes (5 minutes × 3 times).

If a bundle A1 of state quantities to be evaluated is extracted from the state quantity file 31 (S24), the Mahalanobis distance of the bundle A1 of state quantities based on an unit space S1 initially set is calculated (S25), and it is determined whether or not the Mahalanobis distance is equal to or less than a threshold value (S31). It is determined that the operation state is abnormal, for example, based on this determination result, and information to the effect that the operation state is abnormal is displayed (S33). In this process, 1 is added to the value m of the update time counter, and the value m becomes 1 from 0 (S26).

The unit space S1 initially set by the unit space initial setting section 12 is configured by six bundles of state quantities consecutively acquired from the gas turbine power plant 1 by the state quantity acquisition section 11 at the acquisition cycle of 1 minute. For this reason, since the acquisition cycle for acquiring the bundle of state quantities is 1 minute, the collection period P1 of the six bundles of state quantities configuring the unit space S1 is 5 minutes.

Thereafter, the processing returns to Step 17, and if the second evaluation time is reached, the latest bundle of state quantities is extracted from the state quantity file 31 as a bundle A2 of state quantities to be evaluated (S24). Next, similarly to the first evaluation time, the Mahalanobis distance of the bundle A2 of state quantities based on the unit space S1 initially set is calculated (S25), and it is determined whether or not the Mahalanobis distance is equal to or less than the threshold value (S31). It is determined that the operation state is normal, for example, based on this determination result, and information to the effect that the operation state is normal is displayed (S34). In this process, 1 is added to the value m of the update time counter, and the value m becomes 2 from 1 (S26).

The processing returns to Step 17 again, and if the third evaluation time is reached, the latest bundle of state quantities is extracted from the state quantity file 31 as a bundle A3 of state quantities to be evaluated (S24). Next, similarly to the first and second evaluation times, the Mahalanobis distance of the bundle A3 of state quantities based on the unit space S1 initially set is calculated (S25). Next, 1 is added to the value m of the update time counter (S26), and it is determined whether or not the value m of the update time counter becomes 3, that is, whether or not the update time is reached (S27). In this case, since the value m of the update time counter becomes 3 from 2, it is recognized that the update time is reached, the value m of the update time counter is reset to 0 (S28), and then, it is determined whether or not the Mahalanobis distance previously calculated is equal to or less than the threshold value (S31). It is determined that the operation state is normal, for example, based on this determination result, and information to the effect that the operation state is normal is displayed (S34). Then, the unit space in the unit space file 32 is updated (S36).

In this case, the oldest bundle B1 of state quantities among six bundles B1 to B6 of state quantities configuring the unit space S1 in the unit space file 32 is deleted, while the bundle A3 of state quantities to be evaluated which is determined to be normal is added as a bundle B7 of state quantities configuring a new unit space S2. As a result, a collection period P2 of the six bundles B2 to B7 of state quantities configuring the updated unit space S2 becomes 19 minutes obtained by adding the time (15 minutes = 5 minutes × 3) of the three evaluation cycles to the collection period (4 minutes) of the five bundles B2 to B6 of state quantities during the initial setting.

Thereafter, the processing returns to Step 17, and if the fourth evaluation time is reached, the latest bundle of state quantities is extracted from the state quantity file 31 as a bundle A4 of state quantities to be evaluated (S24). Next, the Mahalanobis distance of the bundle A4 of state quantities based on the unit space S2 previously updated is calculated (S25), and it is determined whether or not the Mahalanobis distance is equal to or less than the threshold value (S31). It is determined that the operation state is normal, for example, based on this determination result, and information to the effect that the operation state is normal is displayed (S34). In this process, 1 is added to the value m of the update time counter, and the value m becomes 1 from 0 (S26).

The processing returns to Step 17 again, and if the fifth evaluation time is reached, the latest bundle of state quantities is extracted from the state quantity file 31 as a bundle A5 of state quantities to be evaluated (S24). Next, similarly to the fourth evaluation time, the Mahalanobis distance of the bundle A5 of state quantities based on the updated unit space S2 is calculated (S25), and it is determined whether or not the Mahalanobis distance is equal to or less than the threshold value (S31). In this process, 1 is added to the value m of the update time counter, and the value m becomes 2 from 1 (S26).

The processing returns to Step 17 again, and if the sixth evaluation time is reached, the latest bundle of state quantities is extracted from the state quantity file 31 as a bundle A6 of state quantities to be evaluated (S24). Next, similarly to the fourth and fifth evaluation times, the Mahalanobis distance of the bundle A3 of state quantities based on the updated unit space S2 is calculated (S25). Next, 1 is added to the value m of the update time counter (S26), and it is determined whether or not the value m of the update time counter becomes 3, that is, whether or not the update time is reached (S27). In this case, since the value m of the update time counter becomes 3 from 2, it is recognized that the update time is reached, the value m of the update time counter is reset to 0 (S28), and then, it is determined whether or not the Mahalanobis distance previously calculated is equal to or less than the threshold value (S31). It is determined that the operation state is normal, for example, based on this determination result, and information to the effect that the operation state is normal is displayed (S34). Then, the unit space in the unit space file 32 is updated (S36).

In this case, the oldest bundle B2 of state quantities among the six bundles B2 to B7 of state quantities configuring the unit space S2 in the unit space file 32 is deleted, while a bundle A6 of state quantities to be evaluated which is determined to be normal is added as a bundle B8 of state quantities configuring a new unit space S3. As a result, the collection period of the six bundles B3 to B8 of state quantities configuring the updated unit space S3 becomes 33 minutes obtained by subtracting 1 minute for deleting the bundle B2 of state quantities from the collection period (19 minutes) of the unit space S2 updated at the third evaluation time and adding the time (15 minutes = 5 minutes × 3) of the single unit space update cycle.

Hereafter, similarly, when it is recognized that the update time is reached, the unit spaces S3, S4, S5, and S6 in the unit space file 32 are sequentially updated unless it is determined that a bundle of state quantities to be evaluated is abnormal. The collection period of the six bundles of state quantities configuring the unit spaces S3, S4, S5, and S6 is sequentially extended by 14 minutes (= 15 minutes - 1 minute) since there is a decrease by 1 minute when the oldest bundle of state quantities is deleted and the time (15 minutes) of the single unit space update cycle is added each time the unit space is updated.

For example, during the update at the 18th evaluation time, the oldest bundle B6 of state quantities among six bundles B6 to B11 of state quantities configuring a unit space S6 in the unit space file 32 is deleted, while a bundle A18 of state quantities to be evaluated which is determined to be normal is added as a bundle B12 of state quantities configuring a new unit space S7. As a result, the bundles B7 to B12 of state quantities configuring the unit space S7 after the update do not include any of the six bundles B1 to B6 of state quantities configuring the unit space S1 initially set. A collection period P7 of the six bundles B7 to B12 of state quantities configuring the updated unit space S7 becomes the time of 75 minutes (= 15 minutes × 5) of the five update cycles. Hereafter, when it is recognized that the update time is reached, the collection time of the six bundles of state quantities configuring the unit space is maintained to be the time of 75 minutes of the five update cycles unless it is determined that the bundle of state quantities to be evaluated is abnormal.

On the other hand, in this embodiment, even if it is recognized that the update time is reached, when it is determined that the bundle of state quantities to be evaluated is abnormal, the unit space is not updated. This is to prevent a bundle of state quantities which is determined to be abnormal from being included in a unit space to be a reference for determination of normality or abnormality.

For this reason, for example, at the 24th evaluation time or the 27th evaluation time which is also the update time, even if the latest bundle of state quantities is extracted from the state quantity file 31 as bundles A24 and A27 of state quantities to be evaluated (S24), it is determined whether or not the Mahalanobis distance of each of the bundles A24 and A27 of state quantities to be evaluated is equal to or less than the threshold value (S31), and if it is determined that the operation state is abnormal based on this determination result, the unit space S8 is maintained without being updated.

At the 30th evaluation time which is also the next update time, the latest bundle of state quantities is extracted from the state quantity file 31 as a bundle A30 of state quantities to be evaluated (S24), it is determined whether or not the Mahalanobis distance of the bundle A30 of state quantities to be evaluated is equal to or less than the threshold value (S31), and if it is determined that the operation state is normal based on this determination result, the unit space S8 is updated and becomes a unit space S9 (S36).

In this case, a collection period P9 of bundles B9 to B14 of state quantities configuring the unit space S9 after the update becomes the time of 105 minutes (15 x 7) of the seven (= 5 times + 2 times) update cycles since no update is performed at the two update times.

As described above, in this embodiment, since the unit space to be a reference for determination of normality or abnormality is appropriately updated at every update cycle, it is possible to determine the operation state of the plant while coping with secular change or seasonal variation of the plant.

In this embodiment, since the unit space is not updated at every evaluation time, and the unit space is updated at every update cycle for every predetermined number of evaluation times, it is possible to extend the collection period of the bundles of state quantities configuring the unit space compared to a case where the unit space is updated at every evaluation time. Accordingly, in this embodiment, it is possible to avoid a situation in which the unit space changes sensitively with change in state of the plant, and the operation state is determined to be abnormal even if it should be determined to be normal essentially, or conversely, the operation state is determined to be normal even if it should be determined to be abnormal essentially. For example, when the state of the plant gradually shifts to an abnormal state, it is possible to avoid a situation in which the unit space to be a determination reference sensitively follows change in state of the plant and the operation state is determined to be normal even if it should be determined to be abnormal essentially.

Therefore, in this embodiment, it is possible to determine the operation state of the plant with high accuracy while coping with secular change or seasonal variation of the plant.

In this embodiment, if the plant monitoring device 100 starts the monitoring operation and starts to acquire a bundle of state quantities from the gas turbine power plant 1, the acquired bundle of state quantities is basically successively accumulated as a part of a plurality of bundles of state quantities configuring a unit space until the number of bundles of state quantities configuring the unit space is reached, whereby it is possible to set a unit space over an extremely short period of time. For this reason, in this embodiment, if the plant monitoring device 100 starts the monitoring operation, it is possible to determine the operation state based on the unit space over a short period of time. More specifically, in the example described referring to Fig. 7, while the collection period of a plurality of bundles of state quantities configuring a unit space is 75 minutes at the time when a predetermined period of time has elapsed after the plant monitoring device 100 starts the monitoring operation (in the example of Fig. 7, after the 18th evaluation time), the collection period of a plurality of bundles of state quantities configuring a unit space at the time of the start of the monitoring operation is 5 minutes, and after 5 minutes from the start of the monitoring operation, it is possible to determine the operation state based on the unit space. Therefore, it is possible to shift to monitoring operation using the plant monitoring device 100 quickly especially when, for example, the gas turbine power plant 1 is stopped for periodic inspection and then activated, whereby it is possible to reduce labor for the operation of the plant.

In this way, in this embodiment, while the collection period of a plurality of bundles of state quantities configuring a unit space significantly changes, a part of a plurality of bundles of state quantities configuring a unit space is replaced at every update cycle described above, whereby it is possible to gradually change the collection period of a plurality of bundles of state quantities configuring a unit space.

In this embodiment, it is possible to change various cycles or various threshold values stored in the files 33 and 34 to the cycles or the threshold values designated through the operation of the input device 42 by the operator of the plant monitoring device 100 by means of the cycle setting and change section 17 or the threshold value setting and change section 18. In this embodiment, the maximum value of the value n of the evaluation time counter is changed to change the evaluation cycle and the update cycle, and the maximum value of the value m of the update time counter is changed to change the update cycle. For this reason, in this embodiment, as described above, while the collection period of the bundles of state quantities configuring the unit space is comparatively long, for example, even when operation conditions are rapidly changed, for example, a fuel gas component is changed during the operation of the gas turbine power plant 1, the evaluation cycle or the update cycle can be shortened to thereby cope with the change in the operation conditions over a short period of time.

(Second Embodiment)

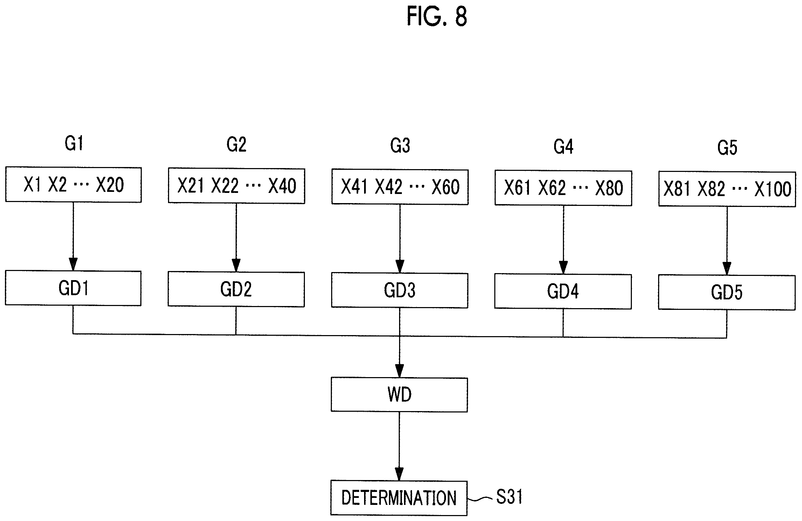

Next, a second embodiment of the invention will be described referring to Figs. 8 to 11.

In this embodiment, the Mahalanobis distance calculation processing is different from that of the first embodiment, and the other kinds of processing are basically the same as those of the first embodiment. For this reason, a plant monitoring device of this embodiment is primarily different from the plant monitoring device 100 of the first embodiment in terms of the processing in the Mahalanobis distance calculation section 14, and the other configurations are basically the same as those in the plant monitoring device of the first embodiment.

Accordingly, hereinafter, the Mahalanobis distance calculation processing in this embodiment will be primarily described. The number u of evaluation items of this embodiment is 100 which is the same as in the first embodiment.

In this embodiment, as shown in Fig. 8, 100 evaluation items are divided into five groups, that is, the evaluation items are divided into five groups G1 to G5, and state quantities X1, X2, ..., and X100 of the respective evaluation items are handled. Then, in this embodiment, the Mahalanobis distances (hereinafter, referred to as intra-group Mahalanobis distances) GD1, GD2, ..., and GD5 of intra-group bundles, which are collections of state quantities of the respective evaluation items in the groups, are calculated by the Mahalanobis distance calculation section 14 for the respective groups G1 to G5, and then, the Mahalanobis distance (hereinafter, referred to as a whole Mahalanobis distance) WD of a bundle of a plurality of intra-group Mahalanobis distances GD1, GD2, ..., and GD5 is calculated. The determination processing (S31) for determining whether or not the operation state of the gas turbine power plant 1 is normal according to whether or not the whole Mahalanobis distance WD is equal to or less than a threshold value is executed by the plant state determination section 15.

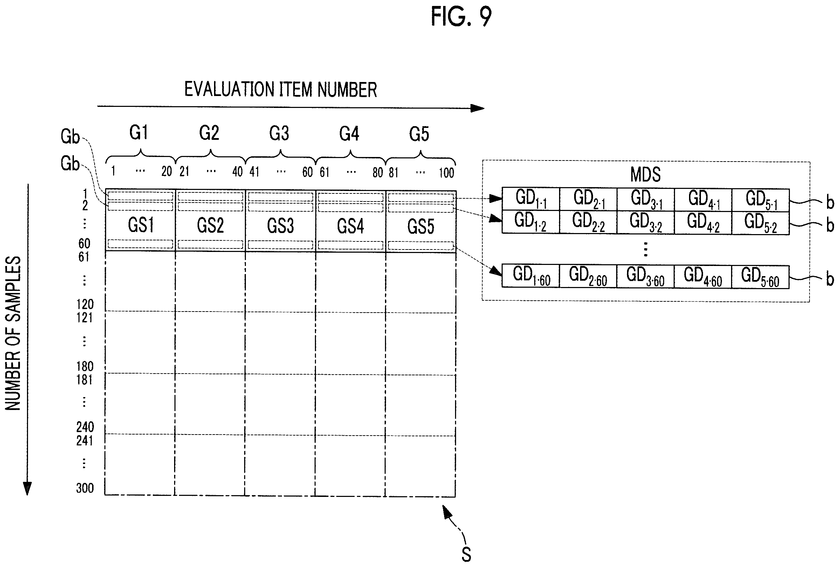

In this embodiment, when calculating the intra-group Mahalanobis distance GD, the Mahalanobis distance calculation section 14 uses an intra-group unit space. As shown in Fig. 9, the intra-group unit space GS is an aggregate of a predetermined number of intra-group bundles Gb. As described above, it is preferable that the number of bundles of state quantities configuring a unit space is three times the number of items of state quantities from the viewpoint of quality engineering. Accordingly, in this embodiment, since the number of evaluation items in the intra-group bundle Gb is 20 (= 100 / 5), the number of intra-group bundles Gb (the number of samples) configuring the intra-group unit space GS is 60 (= 20 × 3). For this reason, the number of state quantities configuring the intra-group unit space GS is 20 (the number of evaluation items of the intra-group bundle) × 60 (the number of intra-group bundles), which makes 1200.

As in Expression (3) described above, when the number of evaluation items is k, an inverse matrix $R^{-1}$ of a variance matrix (correlation matrix) R for use when calculating a Mahalanobis distance based on a unit space is a matrix of k rows and k columns. For this reason, the inverse matrix $R^{-1}$ for use when calculating the intra-group Mahalanobis distance GD based on the intra-group unit space GS of the intra-group bundles Gb is a matrix of 20 rows and 20 columns.

On the other hand, in the first embodiment, 300 bundles of state quantities, which are collections of state quantities of the respective 100 evaluation items, configure the unit space S. For this reason, in the first embodiment, the number of state quantities configuring the unit space S is 100 (the number of evaluation items) × 300 (the number of bundles of state quantities), which makes 30000. The inverse matrix $R^{-1}$ for use when calculating the Mahalanobis distance based on the unit space S is a matrix of 100 rows and 100 columns.

Accordingly, in this embodiment, the number of state quantities configuring the unit space GS to be a reference when calculating the intra-group Mahalanobis distance GD is smaller than the number of state quantities configuring the unit space S of the first embodiment by one digit or more, and the number of elements of the inverse matrix $R^{-1}$ is considerably smaller than the number of elements of the inverse matrix $R^{-1}$ for use in the first embodiment. For this reason, in this embodiment, while the intra-group Mahalanobis distance GD is calculated for every five groups, it is possible to significantly reduce the computation load when calculating the Mahalanobis distance compared to the first embodiment.

In this embodiment, when calculating the whole Mahalanobis distance WD, the Mahalanobis distance calculation section 14 uses an MD unit space MDS. As shown in Fig. 9, the MD unit space MDS is an aggregate of MD bundles b which are collections of the intra-group Mahalanobis distances GD of the respective groups. One MD bundle b is a collection of five (= the number of groups) intra-group Mahalanobis distances GD. All the intra-group Mahalanobis distances GD of the respective groups configuring one MD bundle b are the Mahalanobis distance of one intra-group bundle Gb configuring the intra-group unit space GS based on the intra-group unit space GS. For this reason, the MD unit space MDS is configured by the number of intra-group bundles Gb configuring each intra-group unit space GS, that is, 60 MD bundles b.

Both the intra-group unit space GS and the MD unit space MDS described above are stored in the unit space file 32.

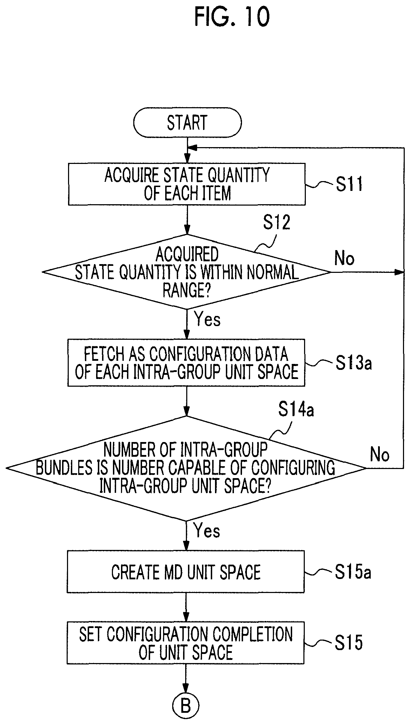

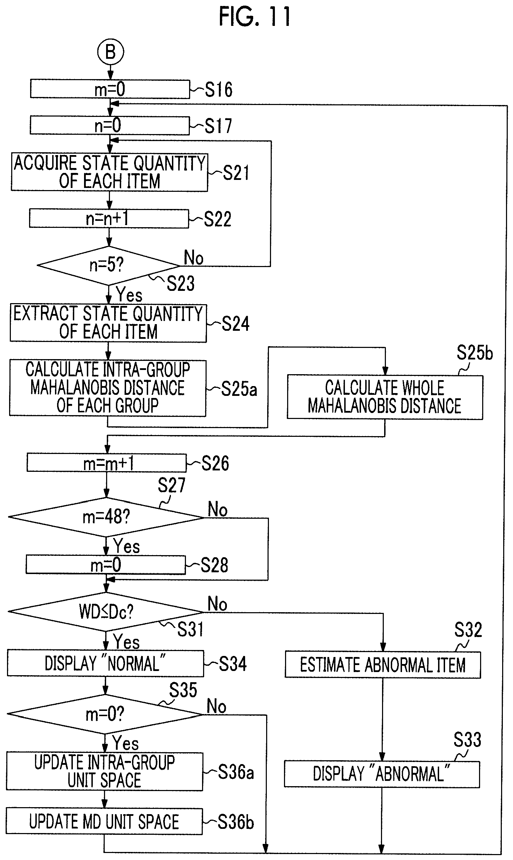

Next, the operation of the plant monitoring device of this embodiment will be simply described referring to the flowcharts shown in Figs. 10 and 11.

If the gas turbine power plant 1 starts to be activated and various state quantity detection means of the gas turbine power plant 1 start to detect various state quantities, as in the first embodiment, the state quantity acquisition section 11 acquires the state quantity of each of a plurality of evaluation items at every acquisition cycle (for example, one-minute cycle) and stores the state quantities in the state quantity file 31 (S11).

If a new bundle of state quantities (a collection of intra-group bundles) is stored in the state quantity file 31, as in the first embodiment, the unit space initial setting section 12 determines whether or not each state quantity configuring the new bundle of state quantities is within a normal range (S12). When the unit space initial setting section 12 determines that any state quantity configuring the new bundle of state quantities is not within the normal range, the processing returns to Step 11. When it is determined that all state quantities configuring the new bundle of state quantities are within the normal range, the unit space initial setting section 12 stores the intra-group bundles of each group configuring the bundle of state quantities in the unit space file 32 as configuration data of each intra-group unit space in association with the acquisition time of the bundle of state quantities (S13a).

Next, the unit space initial setting section 12 determines whether or not the number of intra-group bundles of each group stored in the unit space file 32 is the number capable of configuring the intra-group unit space (S14a). As described above, the number of intra-group bundles configuring the intra-group unit space is 60 which is three times the number of evaluation items (20) of the intra-group bundle.

When the number of intra-group bundles stored in the unit space file 32 does not reach the number capable of configuring the intra-group unit space, the processing returns to Step 11, and the acquisition of the state quantity of each item is executed. When the number of intra-group bundles stored in the unit space file 32 is a number capable of configuring the intra-group unit space, the unit space initial setting section 12 recognizes that the intra-group unit space of each group has been configured in the unit space file 32, causes the Mahalanobis distance calculation section 14 to create the MD unit space MDS based on the intra-group unit spaces as described referring to Fig. 9, and stores the MD unit space MDS in the unit space file 32 (S15a). The unit space initial setting section 12 recognizes that the configuration of all intra-group unit spaces and the MD unit space is completed, and as in the first embodiment, sets, for example, "configuration completion" in the unit space file 32 (S15).

If "configuration completion" or the like is set in the unit space file 32 (S15), as in the first embodiment, the unit space update section 16 sets the value m of the update time counter to 0 (S16 in Fig. 11), and the state quantity extraction section 13 sets the value n of the evaluation time counter to 0 (S17).

After the value n of the evaluation time counter is set to 0 (S17), as in the first embodiment, if a new acquisition time is reached, similarly to the processing in Step 11, the state quantity acquisition section 11 acquires the state quantity of each of a plurality of evaluation items from the gas turbine power plant 1 and stores the state quantities in the state quantity file 31 as a bundle of state quantities (a collection of intra-group bundles) in association with the acquisition time (S21).

If the state quantity acquisition section 11 acquires the bundle of state quantities (S21), as in the first embodiment, the state quantity extraction section 13 adds 1 to the value n of the evaluation time counter (S22), and determines whether or not the value n of the evaluation time counter becomes, for example, 5 (S23). If the value n of the evaluation time counter is not 5, it is recognized that the evaluation time is not yet reached, and the processing returns to Step 21. If it is determined that the value n of the evaluation time counter becomes 5, the state quantity extraction section 13 recognizes that the evaluation time of the state quantity is reached, and extracts the latest bundle of state quantities from the state quantity file 31 as a bundle of state quantities (a collection of intra-group bundles) to be evaluated (S24).

If the state quantity extraction section 13 extracts the bundle of state quantities to be evaluated (S24), the Mahalanobis distance calculation section 14 calculates the intra-group Mahalanobis distance GD based on each intra-group unit space stored in the unit space file 32 with respect to the intra-group bundles of each group configuring the bundle of state quantities to be evaluated extracted in Step 24 (S25a).

The Mahalanobis distance calculation section 14 calculates the Mahalanobis distance based on the MD unit space stored in the unit space file 32 with respect to the bundles of intra-group Mahalanobis distances GD of the respective groups calculated in Step 25a, that is, the whole Mahalanobis distance WD (S25b). In order to use the mean value Mi and the standard deviation $\sigma i$, regarding the unit space, and the inverse matrix $R^{-1}$ When calculating the intra-group Mahalanobis distances GD and the whole Mahalanobis distance WD in Steps 24 and 25 of the next routine, the Mahalanobis distance calculation section 14 stores the mean value Mi, the standard deviation $\sigma i$, and the inverse matrix $R^{-1}$ in the auxiliary storage device 30.

If the whole Mahalanobis distance WD is calculated (S25b), as in the first embodiment, the unit space update section 16 adds 1 to the value m of the update time counter (S26), and determines whether or not the new value m of the update time counter is, for example, 48 (S27). If the value m of the update time counter is 48, the unit space update section 16 recognizes that the update time of the unit space is reached, resets the value m of the update time counter to 0, and then proceeds to Step 31. If the value m of the update time counter is not 48, the unit space update section 16 recognizes that the update time of the unit space is not reached, and immediately proceeds to Step 31.

In Step 31, the plant state determination section 15 determines whether or not the whole Mahalanobis distance WD calculated in Step 25b is equal to or less than the threshold value Dc stored in the threshold value file 34. In Step 31, when it is determined that the whole Mahalanobis distance WD is not equal to or less than the threshold value Dc, that is, exceeds the threshold value Dc, as in the first embodiment, the plant state determination section 15 recognizes that the operation state of the gas turbine power plant 1 is abnormal, and estimates the items of abnormal state quantities (S32). As in the first embodiment, the plant state determination section 15 causes the IO control section 19 to display, on the display device 43, information to the effect that the operation state of the gas turbine power plant 1 is abnormal, the items of abnormal state quantities, and the state quantities (S33), and then, returns to Step 17.

In Step 31, when it is determined that the whole Mahalanobis distance WD is equal to or less than the threshold value Dc, as in the first embodiment, the plant state determination section 15 recognizes that the operation state of the gas turbine power plant 1 is normal, and causes the IO control section 19 to display, on the display device 43, information to the effect that the operation state of the gas turbine power plant 1 is normal (S34).

If the information to the effect that the operation state is normal is displayed (S34), as in the first embodiment, the unit space update section 16 determines whether or not the value m of the update time counter is 0 (S35). If it is determined that the value m of the update time counter is 0, the unit space update section 16 updates the intra-group unit spaces stored in the unit space file 32 (S36a). At this time, the unit space update section 16 deletes the oldest intra-group bundle from a plurality of intra-group bundles Gb configuring each of the intra-group unit spaces GS1, GS2, ..., and GS5 (Fig. 9) stored in the unit space file 32, while adding an intra-group bundle Gb of a corresponding group among the intra-group bundles configuring the bundle of state quantities extracted in Step 24 to each of the intra-group unit spaces GS1, GS2, ..., and GS5.

The unit space update section 16 updates the MD unit space stored in the unit space file 32 (S36b). At this time, the unit space update section 16 causes the Mahalanobis distance calculation section 14 to create the MD unit space MDS (Fig. 9) based on a plurality of intra-group unit spaces updated in Step 36a and stores the MD unit space MDS in the unit space file 32.

In Step 35, when it is determined that the value m of the update time counter is 0, and the unit space is updated (S36a, S36b), and in Step 35, when it is determined that the value m of the update time counter is not 0, the unit space update section 16 returns to Step 17.

If the processing returns to Step 17, as in the first embodiment, until the value n of the evaluation time counter becomes 5 after the value n of the evaluation time counter is set to 0, a bundle of state quantities which are the state quantities of the respective evaluation items is repeatedly acquired from the gas turbine power plant 1 at every acquisition cycle (S21 to S23). If the value n of the evaluation time counter becomes 5, it is recognized that the evaluation time of the state quantity is reached, and the latest bundle of state quantities is extracted from the state quantity file 31 as a bundle of state quantities to be evaluated by the state quantity extraction section 13 (S24), and the intra-group Mahalanobis distance GD of each intra-group bundle configuring the bundle of state quantities is calculated by the Mahalanobis distance calculation section 14 (S25a). The whole Mahalanobis distance WD which is the Mahalanobis distance of the bundle of intra-group Mahalanobis distances GD calculated in Step 25a is calculated by the Mahalanobis distance calculation section 14 (S25b). Subsequently, the whole Mahalanobis distance WD is compared with the threshold value Dc by the plant state determination section 15 to determine whether or not the operation state is abnormal, information to the effect that the operation state is abnormal or normal is displayed (S31 to S35), and then, the processing returns to Step 17 again.

The above processing of Step 17, Step 21 to Step 28, and Step 31 to Step 35 is repeated until the value m of the update time counter becomes 48. In the meantime, as described above, the mean value Mi, the standard deviation $\sigma i$, and the inverse matrix $R^{-1}$ calculated in Steps 25a and 25b of the first routine are stored in the auxiliary storage device, and are used when calculating the intra-group Mahalanobis distances or the whole Mahalanobis distance in Steps 25a and 25b of the next and subsequent routines.

The above processing of Step 17, Step 21 to Step 28, and Step 31 to Step 35 is repeatedly executed, and in Step 27, if the unit space update section 16 determines that the value m of the update time counter becomes 48, and recognizes that the update time of the unit space is reached, the value m of the update time counter is reset to 0 (S28). If the operation state is determined to be normal in the operation state determination processing (S31), the intra-group unit spaces and the MD unit space are updated by the unit space update section 16 (S36a, S36b).

As described above, in this embodiment, as in the first embodiment, since the unit space to be a reference for determination of normality or abnormality is updated at every update cycle for every predetermined number of evaluation times, it is possible to determine the operation state of the plant with high accuracy while coping with secular change or seasonal variation of the plant.

In this embodiment, as in the first embodiment, if the plant monitoring device 100 starts the monitoring operation and starts to acquire a bundle of state quantities from the gas turbine power plant 1, basically, the acquired bundle of state quantities is successively accumulated as a part of a plurality of intra-group bundles configuring an intra-group unit space, whereby it is possible to set an intra-group unit space over an extremely short period of time. In addition, in this embodiment, since the number of intra-group bundles configuring an intra-group unit space is smaller than the number of bundles of state quantities configuring a unit space in the first embodiment, it is possible to set a unit space over a shorter period of time than in the first embodiment. Therefore, it is possible to shift to monitoring operation using the plant monitoring device 100 more quickly than in the first embodiment especially when, for example, the gas turbine power plant 1 is stopped for periodic inspection and then activated, whereby it is possible to reduce labor for the operation of the plant.

On the other hand, as described above, the number of intra-group bundles configuring an intra-group unit space is smaller than the number of bundles of state quantities configuring a unit space in the first embodiment. For this reason, as in the first embodiment, if the maximum value of the value n of the evaluation time counter and the maximum value of the value m of the update time counter are respectively set to 5 (= n) and 48 (= m), the collection time of a plurality of intra-group bundles configuring an intra-group unit space becomes shorter than the collection period of a plurality of bundles of state quantities configuring a unit space in the first embodiment. Accordingly, when it is considered that the collection time of a plurality of intra-group bundles configuring an intra-group unit space is short for the gas turbine power plant 1, it is preferable to extend the collection time of a plurality of intra-group bundles configuring an intra-group unit space by changing the maximum value of the value n of the evaluation time counter, changing the maximum value of the value m of the update time counter, or changing the maximum values of the values n and m of both counters to extend the update cycle.

In the foregoing embodiments, although the plant monitoring device 100 is constituted by a single computer, the plant monitoring device may be constituted by a plurality of computers. In this case, for example, the plant monitoring device 100 may be constituted by two computers of a computer which has a function as the state quantity acquisition section 11 and the state quantity file 31 and a computer which has other functions and the like.

In the foregoing embodiments, although the invention is applied to a gas turbine power plant, the invention is not limited thereto, and may be applied to, for example, various plants, such as a nuclear power plant and a chemical plant.

Industrial Applicability

The invention can be widely applied to a plant monitoring device, a plant monitoring program, and a plant monitoring method which monitor the operation state of a plant, and can determine the operation state of the plant with high accuracy while coping with secular change or seasonal variation of the plant.

Reference Signs List

| | |
|---|---|
| 1: | gas turbine power plant |
| 10: | CPU |
| 11: | state quantity acquisition section |
| 12: | unit space initial setting section |
| 13: | state quantity extraction section |
| 14: | Mahalanobis distance calculation section |
| 15: | plant state determination section |
| 16: | unit space update section |
| 17: | cycle setting and change section |
| 18: | threshold value setting and change section |
| 20: | main storage device |
| 30: | auxiliary storage device |
| 31: | state quantity file |
| 32: | unit space file |
| 33: | cycle file |
| 34: | threshold value file |
| 35: | plant monitoring program |
| 41: | IO interface |
| 42: | input device |
| 43: | display device |
| 44: | recording and reproduction device |
| 45: | disk type storage medium |
| 100: | plant monitoring device |

**Claims**

1. A plant monitoring device (100) for monitoring the operation state of a plant (1) having a plurality of evaluation items, the plant monitoring device comprising:

state quantity acquisition means (11) for acquiring, from the plant (1), a bundle of state quantities which is a collection of state quantities of the respective evaluation items;
state quantity storage means (31) for storing the bundle of state quantities acquired by the state quantity acquisition means (11);
unit space storage means (32) for storing a unit space configured by a plurality of bundles of state quantities;
state quantity extraction means (13) for extracting, at every predefined evaluation cycle, a bundle of state quantities to be evaluated from the state quantity storage means (31);
Mahalanobis distance calculation means (14) for calculating, at every evaluation cycle, the Mahalanobis distance of the bundle of state quantities extracted by the state quantity extraction means (13) based on the unit space stored in the unit space storage means (32);
determination means (15) for determining, at every evaluation cycle, whether or not the operation state of the plant (1) is normal according to whether or not the Mahalanobis distance calculated by the Mahalanobis distance calculation means (14) is within a predetermined threshold value; and
unit space update means (16) for adding the newest bundle of state quantities for which it is determined that the operation state of the plant (1) is normal, the newest bundle of state quantities being extracted by the state quantity extraction means (13) to the unit space stored in the unit space storage means (32) while deleting the oldest bundle of state quantities from the unit space at a predefined update cycle longer than the evaluation cycle, **characterised in that**
the unit space storage means (32) is configured to store, for each of a plurality of groups of the plurality of evaluation items, an intra-group unit space configured by a plurality of intra-group bundles, each of which is a collection of state quantities of respective evaluation items in the group, and to store, for each of a plurality of intra-group unit spaces, an MD unit space configured by the Mahalanobis distances of a plurality of intra-group bundles configuring the intra-group unit space based on the intra-group unit space,

the Mahalanobis distance calculation means (14) is configured to calculate the Mahalanobis distance based on the intra-group unit space corresponding to the group among the plurality of intra-group unit spaces stored in the unit space storage means (32) as an intra-group Mahalanobis distance with respect to the plurality of intra-group bundles configuring the bundle of state quantities to be evaluated extracted by the state quantity extraction means (13), and to calculate a whole Mahalanobis distance, which is the Mahalanobis distance of a collection of a plurality of intra-group Mahalanobis distances, based on the MD unit space,

the determination means (15) is configured to determine whether or not the operation state of the plant (1) is normal according to whether or not the whole Mahalanobis distance is within the predetermined threshold value, when the evaluation cycle and the update cycle are reached, the unit space update means (16) is configured to add the bundle of state quantities in the group out of the bundle of state quantities extracted by the state quantity extraction means (13) to each intra-group unit space stored in the unit space storage means (32) while deleting the oldest intra-group bundle in the group from the intra-group unit space, and

if a plurality of new intra-group unit spaces are stored in the unit space storage means (32), the Mahalanobis distance calculation means (14) is configured to calculate, for each of the plurality of intra-group unit spaces, the intra-group Mahalanobis distances of the plurality of intra-group bundles configuring the intra-group unit space based on the intra-group unit space, and to create the MD unit space which is the collection of the plurality of intra-group Mahalanobis distances.

2. The plant monitoring device (100) according to claim 1, further comprising:

unit space initial setting means (12) for, when the unit space is not stored in the unit space storage means (32), extracting the bundle of state quantities from the plurality of bundles of state quantities stored in the state quantity storage means (31) until the number of bundles of state quantities capable of configuring the unit space is reached, and storing the bundle of state quantities in the unit space storage means (32).

3. The plant monitoring device (100) according to claim 1 or 2,
wherein, if the determination means (15) determines that the Mahalanobis distance relating to the bundle of state quantities extracted by the state quantity extraction means (13) is not within the predetermined threshold value, the unit space update means (16) is configured to not add the bundle of state quantities to the unit space stored in the unit space storage means (32) and to not delete the oldest bundle of state quantities from the unit space even at the update cycle.

4. The plant monitoring device (100) according to claim 1, further comprising:

unit space initial setting means (12) for, when the intra-group unit space of each of the plurality of groups is not stored in the unit space storage means (32), extracting the intra-group bundle from the plurality of bundles of state quantities stored in the state quantity storage means (31) until the number of intra-group bundles capable of configuring the intra-group unit space is reached, and storing the intra-group bundle in the unit space storage means (32),

wherein, if the intra-group bundles corresponding to the number capable of configuring the intra-group unit space are stored in the unit space storage means (32), the unit space initial setting means (12) is configured to cause the Mahalanobis distance calculation means (14) to calculate, for each of the plurality of intra-group unit spaces, the intra-group Mahalanobis distances of the plurality of intra-group bundles configuring the intra-group unit space based on the intra-group unit space, and to create the MD unit space which is the collection of the plurality of intra-group Mahalanobis distances.

5. The plant monitoring device (100) according to any one of claims 1 to 4, further comprising:

evaluation cycle change means for changing the evaluation cycle.

6. The plant monitoring device (100) according to any one of claims 1 to 5, further comprising:

update cycle change means for changing the update cycle.

7. A plant monitoring program (35) for monitoring the operation state of a plant (1) having a plurality of evaluation items, the plant monitoring program (35) causing a computer to execute:

a state quantity extraction step (S24) of extracting, at every predefined evaluation cycle, a bundle of state quantities to be evaluated from a state quantity file (31) of a storage unit (30) of the computer, in which a bundle of state quantities which is a collection of state quantities of the respective evaluation items acquired from the plant (1) is stored in time series;

a Mahalanobis distance calculation step (S25) of calculating, at every evaluation cycle, the Mahalanobis distance of the bundle of state quantities extracted in the state quantity extraction step (S24) based on a unit space stored in a unit space file (32) of the storage unit (30) and configured by a plurality of bundles of state quantities;

a determination step (S31) of determining, at every evaluation cycle, whether or not the operation state of the plant (1) is normal according to whether or not the Mahalanobis distance calculated in the Mahalanobis distance calculation step (S25) is within a predetermined threshold value; and

a unit space update step (S36) of adding the newest bundle of state quantities for which it is determined that the operation state of the plant (1) is normal, the newest bundle of state quantities being extracted in the state quantity extraction step (S24) to the unit space stored in the unit space file (32) while deleting the oldest bundle of state quantities from the unit space at a predefined update cycle longer than the evaluation cycle, **characterised in that**

the unit space file (32) stores, for each of a plurality of groups of the plurality of evaluation items, an intra-group unit space configured by a plurality of intra-group bundles, each of which is a collection of state quantities of respective evaluation items in the group, and stores, for each of a plurality of intra-group unit spaces, an MD unit space configured by the Mahalanobis distances of a plurality of intra-group bundles configuring the intra-group unit space based on the intra-group unit space,

in the Mahalanobis distance calculation step (S25), the Mahalanobis distance based on the intra-group unit space corresponding to the group among the plurality of intra-group unit spaces stored in the unit space file (32) is calculated as an intra-group Mahalanobis distance with respect to the plurality of intra-group bundles configuring the bundle of state quantities to be evaluated extracted in the state quantity extraction step (S24), and a whole Mahalanobis distance, which is the Mahalanobis distance of a collection of a plurality of intra-group Mahalanobis distances, is calculated based on the MD unit space,

in the determination step (S31), it is determined whether or not the operation state of the plant (1) is normal according to whether or not the whole Mahalanobis distance is within the predetermined threshold value,

in the unit space update step (S36), when the update cycle is reached, the bundle of state quantities in the group out of the bundle of state quantities extracted in the state quantity extraction step (S24) is added to each intra-group unit space stored in the unit space file (32) while the oldest intra-group bundle in the group is deleted from the intra-group unit space, and

in the Mahalanobis distance calculation step (S25), if a plurality of new intra-group unit spaces are stored in the unit space file (32), for each of the plurality of intra-group unit spaces, the intra-group Mahalanobis distances of the plurality of intra-group bundles configuring the intra-group unit space are calculated based on the intra-group unit space, and the MD unit space which is the collection of the plurality of intra-group Mahalanobis distances is created.

8. The plant monitoring program (35) according to claim 7, causing the computer to execute:

a state quantity acquisition step (S11) of acquiring a bundle of state quantities, which is a collection of state quantities of the respective evaluation items, from the plant (1) and storing the bundle of state quantities in the state quantity file (31).

9. The plant monitoring program (35) according to claim 7 or 8, causing the computer to execute:

a unit space initial setting step of, when the unit space is not stored in the unit space file (32), extracting the bundle of state quantities from the plurality of bundles of state quantities stored in the state quantity file (31) until the number of bundles of state quantities capable of configuring the unit space is reached, and storing the bundle of state quantities in the unit space file (32).

10. The plant monitoring program (35) according to claim 7, causing the computer to execute:

a unit space initial setting step of, when the intra-group unit space of each of the plurality of groups is not stored in the unit space file (32), extracting the intra-group bundle from the plurality of bundles of state quantities stored in the state quantity file (31) until the number of intra-group bundles capable of configuring the intra-group unit space is reached, and storing the intra-group bundle in the unit space file (32),

wherein, in the unit space initial setting step, if the intra-group bundles corresponding to the number capable of configuring the intra-group unit space are stored in the unit space file (32), in the Mahalanobis distance calculation step (S25), for each of the plurality of intra-group unit spaces, the intra-group Mahalanobis distances of the plurality of intra-group bundles configuring the intra-group unit space are calculated based on the intra-group unit space, and the MD unit space which is the collection of the plurality of intra-group Mahalanobis distances is created.

11. A plant monitoring method for monitoring the operation state of a plant (1) having a plurality of evaluation items, the method executing:

a state quantity acquisition step (S11) of acquiring a bundle of state quantities, which is a collection of state quantities of the respective evaluation items, from the plant (1) and storing the bundle of state quantities in a state quantity file (31);

a state quantity extraction step (S24) of extracting a bundle of state quantities to be evaluated from the state quantity file (31) at every predefined evaluation cycle;

a Mahalanobis distance calculation step (S25) of calculating, at every evaluation cycle, the Mahalanobis distance of the bundle of state quantities extracted in the state quantity extraction step (S24) based on a unit space stored in a unit space file (32) and configured by a plurality of bundles of state quantities;

a determination step (S31) of determining, at every evaluation cycle, whether or not the operation state of the plant (1) is normal according to whether or not the Mahalanobis distance calculated in the Mahalanobis distance calculation step (S25) is within a predetermined threshold value; and

a unit space update step (S36) of adding the newest bundle of state quantities for which it is determined that the operation state of the plant (1) is normal, the newest bundle of state quantities being extracted in the state quantity extraction step (S24) to the unit space stored in the unit space file (32) while deleting the oldest bundle of state quantities from the unit space at a predefined update cycle longer than the evaluation cycle, **characterised in that**

the unit space file (32) stores, for each of a plurality of groups of the plurality of evaluation items, an intra-group unit space configured by a plurality of intra-group bundles, each of which is a collection of state quantities of respective evaluation items in the group, and stores, for each of a plurality of intra-group unit spaces, an MD unit space configured by the Mahalanobis distances of a plurality of intra-group bundles configuring the intra-group unit space based on the intra-group unit space,

in the Mahalanobis distance calculation step (S25), the Mahalanobis distance based on the intra-group unit space corresponding to the group among the plurality of intra-group unit spaces stored in the unit space file (32) is calculated as an intra-group Mahalanobis distance with respect to the plurality of intra-group bundles configuring the bundle of state quantities to be evaluated extracted in the state quantity extraction step (S24), and a whole Mahalanobis distance, which is the Mahalanobis distance of a collection of a plurality of intra-group Mahalanobis distances, is calculated based on the MD unit space,

in the determination step (S31), it is determined whether or not the operation state of the plant (1) is normal according to whether or not the whole Mahalanobis distance is within the predetermined threshold value,

in the unit space update step (S36), when the update cycle is reached, the bundle of state quantities in the group out of the bundle of state quantities extracted in the state quantity extraction step (S24) is added to each intra-group unit space stored in the unit space file (32) while the oldest intra-group bundle in the group is deleted from the intra-group unit space, and

in the Mahalanobis distance calculation step (S25), if a plurality of new intra-group unit spaces are stored in the unit space file (32), for each of the plurality of intra-group unit spaces, the intra-group Mahalanobis distances of the plurality of intra-group bundles configuring the intra-group unit space are calculated based on the intra-group unit space, and the MD unit space which is the collection of the plurality of intra-group Mahalanobis distances is created.

12. The plant monitoring method according to claim 11, further executing:

a unit space initial setting step of, when the unit space is not stored in the unit space file (32), extracting the bundle of state quantities from the plurality of bundles of state quantities stored in the state quantity file (31) until the number of bundles of state quantities capable of configuring the unit space is reached, and storing the bundle of state quantities in the unit space file (32).

13. The plant monitoring method according to claim 11, further executing:

a unit space initial setting step of, when the intra-group unit space of each of the plurality of groups is not stored in the unit space file (32), extracting the intra-group bundle from the plurality of bundles of state quantities stored in the state quantity file (31) until the number of intra-group bundles capable of configuring the intra-group unit space is reached, and storing the intra-group bundle in the unit space file (32),

wherein, in the unit space initial setting step, if the intra-group bundles corresponding to the number capable of configuring the intra-group unit space are stored in the unit space file (32), in the Mahalanobis distance calculation step (S25), for each of the plurality of intra-group unit spaces, the intra-group Mahalanobis distances of the plurality of intra-group bundles configuring the intra-group unit space are calculated based on the intra-group unit space, and the MD unit space which is the collection of the plurality of intra-group Mahalanobis distances is created.

## Patentansprüche

1. Anlagenüberwachungsvorrichtung (100) zum Überwachen des Betriebszustands einer Anlage (1) mit einer Vielzahl von Bewertungsobjekten, wobei die Anlagenüberwachungsvorrichtung aufweist:

eine Zustandsgrößenakquirierungseinrichtung (11) zum Akquirieren von der Anlage (1) eines Bündels von Zustandsgrößen, welches eine Sammlung von Zustandsgrößen der jeweiligen Bewertungsobjekte darstellt;

eine Zustandsgrößenspeichereinrichtung (31) zum Speichern des Bündels von Zustandsgrößen, das durch die Zustandsgrößenakquirierungseinrichtung (11) akquiriert ist;

eine Einheitsraumspeichereinrichtung (32) zum Speichern eines Einheitsraums, der durch eine Vielzahl von Bündeln von Zustandsgrößen konfiguriert ist;

eine Zustandsgrößenextraktionseinrichtung (13) zum Extrahieren zu jedem vordefinierten Bewertungszyklus eines Bündels von Zustandsgrößen, die zu bewerten sind, aus der Zustandsgrößenspeichereinrichtung (31);

eine Mahalanobisentfernungs-Berechnungseinrichtung (14) zum Berechnen zu jedem Bewertungszyklus der Mahalanobisentfernung des Bündels von Zustandsgrößen, das durch die Zustandsgrößenextraktionseinrichtung (13) extrahiert ist, basierend auf dem in der Einheitsraumspeichereinrichtung (32) gespeicherten Einheitsraum;

eine Bestimmungseinrichtung (15) zum Bestimmen zu jedem Bewertungszyklus, ob der Betriebszustand der Anlage (1) normal ist oder nicht, in Abhängigkeit davon, ob die durch die Mahalanobisentfernungs-Berechnungseinrichtung (14) berechnete Mahalanobisentfernung innerhalb eines vorbestimmten Schwellenwerts liegt oder nicht; und

eine Einheitsraumaktualisierungseinrichtung (16) zum Hinzufügen des neuesten Bündels von Zustandsgrößen, für welches bestimmt ist, dass der Betriebszustand der Anlage (1) normal ist, wobei das neueste Bündel von Zustandsgrößen durch die Zustandsgrößenextraktionseinrichtung (13) extrahiert ist, zu dem in der Einheitsraumspeichereinrichtung (32) gespeicherten Einheitsraum, während das älteste Bündel von Zustandsgrößen aus dem Einheitsraum zu einem vordefinierten Aktualisierungszyklus, der länger als der Bewertungszyklus ist, gelöscht wird,

**dadurch gekennzeichnet, dass**

die Einheitsraumspeichereinrichtung (32) konfiguriert ist, um für jede einer Vielzahl von Gruppen der Vielzahl von Bewertungsobjekten einen Intra-Gruppeneinheitsraum, der durch eine Vielzahl von Intra-Gruppenbündeln konfiguriert ist, von welchen jedes eine Sammlung von Zustandsgrößen von jeweiligen Bewertungsobjekten in der Gruppe darstellt, zu speichern, und um für jede einer Vielzahl von Intra-Gruppeneinheitsräumen einen MD-Einheitsraum, der durch die Mahalanobisentfernungen einer Vielzahl von Intra-Gruppenbündeln, die den Intra-Gruppeneinheitsraum konfigurieren, konfiguriert ist, basierend auf dem Intra-Gruppeneinheitsraum zu speichern,

die Mahalanobisentfernungs-Berechnungseinrichtung (14) konfiguriert ist, um die Mahalanobisentfernung basierend auf dem Intra-Gruppeneinheitsraum korrespondierend zu der Gruppe unter der Vielzahl von Intra-Gruppeneinheitsräumen, die in der Einheitsraumspeichereinrichtung (32) gespeichert sind, als eine Intra-Gruppen-Mahalanobisentfernung mit Bezug auf die Vielzahl von Intra-Gruppenbündeln, die das Bündel von zu bewertenden Zustandsgrößen, das durch die Zustandsgrößenextraktionseinrichtung (13) extrahiert ist, konfigurieren, zu berechnen, und um eine Gesamtmahalanobisentfernung, welche die Mahalanobisentfernung einer Sammlung einer Vielzahl von Intra-Gruppen-Mahalanobisentfernungen darstellt, basierend auf dem MD-Einheitsraum zu berechnen,

die Bestimmungseinrichtung (15) konfiguriert ist, um zu bestimmen, ob der Betriebszustand der Anlage (1) normal ist oder nicht, in Abhängigkeit davon, ob die Gesamtmahalanobisentfernung innerhalb des vorbestimmten Schwellenwerts liegt oder nicht,

wenn der Bewertungszyklus und der Aktualisierungszyklus erreicht sind, die Einheitsraumaktualisierungseinrichtung (16) konfiguriert ist, um das Bündel von Zustandsgrößen in der Gruppe aus dem Bündel von Zustandsgrößen, die durch die Zustandsgrößenextraktionseinrichtung (13) extrahiert sind, zu jedem Intra-Gruppeneinheitsraum, der in der Einheitsraumspeichereinrichtung (32) gespeichert ist, hinzuzufügen, während das älteste Intra-Gruppenbündel in der Gruppe aus dem Intra-Gruppeneinheitsraum gelöscht wird, und

falls eine Vielzahl von neuen Intra-Gruppeneinheitsräumen in der Einheitsraumspeichereinrichtung (32) gespeichert sind, die Mahalanobisentfernungs-Berechnungseinrichtung (14) konfiguriert ist, um für jeden der Vielzahl von Intra-Gruppeneinheitsräumen die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum zu berechnen, und um den MD-Einheitsraum, welcher die Sammlung der Vielzahl von Intra-Gruppen-Mahalanobisentfernungen darstellt, zu erzeugen.

2. Anlagenüberwachungsvorrichtung (100) nach Anspruch 1, ferner aufweisend:

eine Einheitsraum-Anfangseinstelleinrichtung (12) zum Extrahieren des Bündels von Zustandsgrößen aus der Vielzahl von Bündeln von Zustandsgrößen, die in der Zustandsgrößenspeichereinrichtung (31) gespeichert sind, bis die Anzahl an Bündeln von Zustandsgrößen, die in der Lage sind, den Einheitsraum zu konfigurieren, erreicht ist, wenn der Einheitsraum nicht in der Einheitsraumspeichereinrichtung (32) gespeichert ist, und Speichern des Bündels von Zustandsgrößen in der Einheitsraumspeichereinrichtung (32).

3. Anlagenüberwachungsvorrichtung (100) nach Anspruch 1 oder 2,
wobei, falls die Bestimmungseinrichtung (15) bestimmt, dass die Mahalanobisentfernung bezogen auf das Bündel von Zustandsgrößen, die durch die Zustandsgrößenextraktionseinrichtung (13) extrahiert sind, nicht innerhalb des vorbestimmten Schwellenwerts liegt, die Einheitsraumaktualisierungseinrichtung (16) konfiguriert ist, um das Bündel von Zustandsgrößen nicht zu dem Einheitsraum, der in der Einheitsraumspeichereinrichtung (32) gespeichert ist, hinzuzufügen, und um das älteste Bündel von Zustandsgrößen nicht aus dem Einheitsraum sogar zu dem Aktualisierungszyklus zu löschen.

4. Anlagenüberwachungsvorrichtung (100) nach Anspruch 1, ferner aufweisend:

eine Einheitsraum-Anfangseinstelleinrichtung (12) zum Extrahieren des Intra-Gruppenbündels aus der Vielzahl von Bündeln von Zustandsgrößen, die in der Zustandsgrößenspeichereinrichtung (31) gespeichert sind, bis die Anzahl an Intra-Gruppenbündeln, die in der Lage sind, den Intra-Gruppeneinheitsraum zu konfigurieren, erreicht ist, wenn der Intra-Gruppeneinheitsraum von jeder der Vielzahl von Gruppen nicht in der Einheitsraumspeichereinrichtung (32) gespeichert ist, und Speichern des Intra-Gruppenbündels in der Einheitsraumspeichereinrichtung (32),
wobei, falls die Intra-Gruppenbündel korrespondierend zu der Anzahl, die zum Konfigurieren des Intra-Gruppeneinheitsraums in der Lage ist, in der Einheitsraumspeichereinrichtung (32) gespeichert sind, die Einheitsraum-Anfangseinstelleinrichtung (12) konfiguriert ist, um zu bewirken, dass die Mahalanobisentfernungs-Berechnungseinrichtung (14) für jeden der Vielzahl von Intra-Gruppeneinheitsräumen die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum berechnet, und um den MD-Einheitsraum, welcher die Sammlung der Vielzahl von Intra-Gruppen-Mahalanobisentfernungen darstellt, zu erzeugen.

5. Anlagenüberwachungsvorrichtung (100) nach einem der Ansprüche 1 bis 4, ferner aufweisend:

eine Bewertungszyklusänderungseinrichtung zum Ändern des Bewertungszyklus.

6. Anlagenüberwachungsvorrichtung (100) nach einem der Ansprüche 1 bis 5, ferner aufweisend:

eine Aktualisierungszyklusänderungseinrichtung zum Ändern des Aktualisierungszyklus.

7. Anlagenüberwachungsprogramm (35) zum Überwachen des Betriebszustands einer Anlage (1) mit einer Vielzahl von Bewertungsobjekten, wobei das Anlagenüberwachungsprogramm (35) bewirkt, dass ein Computer die folgenden Schritte ausführt:

einen Zustandsgrößenextraktionsschritt (S24) zum Extrahieren zu jedem vordefinierten Bewertungszyklus eines Bündels von Zustandsgrößen, die zu bewerten sind, aus einer Zustandsgrößendatei (31) einer Speichereinheit (30) des Computers, in welcher ein Bündel von Zustandsgrößen, welches eine Sammlung von Zustandsgrößen der von der Anlage (1) akquirierten jeweiligen Bewertungsobjekte darstellt, in zeitlicher Folge gespeichert ist; einen Mahalanobisentfernungs-Berechnungsschritt (S25) zum Berechnen zu jedem Bewertungszyklus der Mahalanobisentfernung des Bündels von Zustandsgrößen, die in dem Zustandsgrößenextraktionsschritt (S24) extrahiert sind, basierend auf einem in einer Einheitsraumdatei (32) der Speichereinheit (30) gespeicherten Einheitsraum, und durch eine Vielzahl von Bündeln von Zustandsgrößen konfiguriert sind;

einen Bestimmungsschritt (S31) zum Bestimmen zu jedem Bewertungszyklus, ob der Betriebszustand der Anlage (1) normal ist oder nicht, in Abhängigkeit davon, ob die in dem Mahalanobisentfernungs-Berechnungsschritt (S25) berechnete Mahalanobisentfernung innerhalb eines vorbestimmten Schwellenwerts liegt oder nicht; und

einen Einheitsraumaktualisierungsschritt (S36) zum Hinzufügen des neuesten Bündels von Zustandsgrößen, für welches bestimmt ist, dass der Betriebszustand der Anlage (1) normal ist, wobei das neueste Bündel von Zustandsgrößen in dem Zustandsgrößenextraktionsschritt (S24) extrahiert ist, zu dem in der Einheitsraumdatei (32) gespeicherten Einheitsraum, während das älteste Bündel von Zustandsgrößen aus dem Einheitsraum zu einem vordefinierten Aktualisierungszyklus, der länger als der Bewertungszyklus ist, gelöscht wird,

**dadurch gekennzeichnet, dass**

die Einheitsraumdatei (32) für jede einer Vielzahl von Gruppen der Vielzahl von Bewertungsobjekten einen Intra-Gruppeneinheitsraum, der durch eine Vielzahl von Intra-Gruppenbündeln konfiguriert ist, speichert, von welchen jedes eine Sammlung von Zustandsgrößen von jeweiligen Bewertungsobjekten in der Gruppe darstellt, und für jeden einer Vielzahl von Intra-Gruppeneinheitsräumen einen MD-Einheitsraum, der durch die Mahalanobisentfernungen einer Vielzahl von Intra-Gruppenbündeln, die den Intra-Gruppeneinheitsraum konfigurieren, konfiguriert ist, basierend auf dem Intra-Gruppeneinheitsraum speichert,

in dem Mahalanobisentfernungs-Berechnungsschritt (S25) die Mahalanobisentfernung basierend auf dem Intra-Gruppeneinheitsraum korrespondierend zu der Gruppe unter der Vielzahl von Intra-Gruppeneinheitsräumen, die in der Einheitsraumdatei (32) gespeichert sind, als eine Intra-Gruppen-Mahalanobisentfernung mit Bezug auf die Vielzahl von Intra-Gruppenbündeln, die das zu bewertende Bündel von Zustandsgrößen konfigurieren, das in dem Zustandsgrößenextraktionsschritt (S24) extrahiert ist, berechnet wird, und eine Gesamtmahalanobisentfernung, welche die Mahalanobisentfernung einer Sammlung einer Vielzahl von Intra-Gruppen-Mahalanobisentfernungen darstellt, basierend auf dem MD-Einheitsraum berechnet wird,

in dem Bestimmungsschritt (S31) bestimmt wird, ob der Betriebszustand der Anlage (1) normal ist oder nicht, in Abhängigkeit davon, ob die Gesamtmahalanobisentfernung innerhalb des vorbestimmten Schwellenwerts liegt oder nicht,

in dem Einheitsraumaktualisierungsschritt (S36), wenn der Aktualisierungszyklus erreicht ist, das Bündel von Zustandsgrößen in der Gruppe aus dem Bündel von Zustandsgrößen, das in dem Zustandsgrößenextraktionsschritt (S24) extrahiert ist, zu jedem Intra-Gruppeneinheitsraum, der in der Einheitsraumdatei (32) gespeichert ist, hinzugefügt wird, während das älteste Intra-Gruppenbündel in der Gruppe aus dem Intra-Gruppeneinheitsraum gelöscht wird, und

in dem Mahalanobisentfernungs-Berechnungsschritt (S25), falls eine Vielzahl von neuen Intra-Gruppeneinheitsräumen in der Einheitsraumdatei (32) gespeichert ist, für jeden der Vielzahl von Intra-Gruppeneinheitsräumen die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum berechnet werden, und der MD-Einheitsraum, welcher die Sammlung der Vielzahl von Intra-Gruppen-Mahalanobisentfernungen darstellt, erzeugt wird.

8. Anlagenüberwachungsprogramm (35) nach Anspruch 7, das den Computer bewirkt, um den folgenden Schritt auszuführen:

einen Zustandsgrößenakquirierungsschritt (S11) zum Akquirieren eines Bündels von Zustandsgrößen, welches eine Sammlung von Zustandsgrößen der jeweiligen Bewertungsobjekte darstellt, von der Anlage (1), und Speichern des Bündels von Zustandsgrößen in der Zustandsgrößendatei (31).

9. Anlagenüberwachungsprogramm (35) nach Anspruch 7 oder 8, das bewirkt, dass der Computer den folgenden Schritt ausführt:

einen Einheitsraum-Anfangseinstellschritt zum Extrahieren des Bündels von Zustandsgrößen aus der Vielzahl von Bündeln von Zustandsgrößen, die in der Zustandsgrößendatei (31) gespeichert sind, bis die Anzahl an Bündeln von Zustandsgrößen, die in der Lage ist, den Einheitsraum zu konfigurieren, erreicht ist, wenn der Einheitsraum nicht in der Einheitsraumdatei (32) gespeichert ist, und Speichern des Bündels von Zustandsgrößen in der Einheitsraumdatei (32).

10. Anlagenüberwachungsprogramm (35) nach Anspruch 7, das bewirkt, dass der Computer den folgenden Schritt ausführt:

   einen Einheitsraum-Anfangseinstellschritt zum Extrahieren des Intra-Gruppenbündels aus der Vielzahl von Bündeln von Zustandsgrößen, die in der Zustandsgrößendatei (31) gespeichert sind, bis die Anzahl an Intra-Gruppenbündeln, die in der Lage ist, den Intra-Gruppeneinheitsraum zu konfigurieren, erreicht ist, wenn der Intra-Gruppeneinheitsraum von jeder der Vielzahl von Gruppen nicht in der Einheitsraumdatei (32) gespeichert ist, und Speichern des Intra-Gruppenbündels in der Einheitsraumdatei (32),
   wobei in dem Einheitsraum-Anfangseinstellschritt, falls die Intra-Gruppenbündel korrespondierend zu der Anzahl, die in der Lage ist, den Intra-Gruppeneinheitsraum zu konfigurieren, in der Einheitsraumdatei (32) in dem Mahalanobisentfernungs-Berechnungsschritt (S25) für jeden der Vielzahl von Intra-Gruppeneinheitsräumen gespeichert sind, die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum berechnet werden, und der MD-Einheitsraum, welcher die Sammlung der Vielzahl von Intra-Gruppen-Mahalanobisentfernungen darstellt, erzeugt wird.

11. Anlagenüberwachungsverfahren zum Überwachen des Betriebszustands einer Anlage (1) mit einer Vielzahl von Bewertungsobjekten, wobei das Verfahren ausführt:

   einen Zustandsgrößenakquirierungsschritt (S11) zum Akquirieren eines Bündels von Zustandsgrößen, welches eine Sammlung von Zustandsgrößen der jeweiligen Bewertungsobjekte darstellt, von der Anlage (1), und Speichern des Bündels von Zustandsgrößen in einer Zustandsgrößendatei (31);
   einen Zustandsgrößenextraktionsschritt (S24) zum Extrahieren eines Bündels von zu bewertenden Zustandsgrößen aus der Zustandsgrößendatei (31) zu jedem vordefinierten Bewertungszyklus;
   einen Mahalanobisentfernungs-Berechnungsschritt (S25) zum Berechnen zu jedem Bewertungszyklus der Mahalanobisentfernung des Bündels von Zustandsgrößen, das in dem Zustandsgrößenextraktionsschritt (S24) extrahiert ist, basierend auf einem in einer Einheitsraumdatei (32) gespeicherten und durch eine Vielzahl von Bündeln von Zustandsgrößen konfigurierten Einheitsraum;
   einen Bestimmungsschritt (S31) zum Bestimmen zu jedem Bewertungszyklus, ob der Betriebszustand der Anlage (1) normal ist oder nicht, in Abhängigkeit davon, ob die in dem Mahalanobisentfernungs-Berechnungsschritt (S25) berechnete Mahalanobisentfernung innerhalb eines vorbestimmten Schwellenwerts liegt oder nicht; und
   einen Einheitsraumaktualisierungsschritt (S36) zum Hinzufügen des neuesten Bündels von Zustandsgrößen, für welches bestimmt ist, dass der Betriebszustand der Anlage (1) normal ist, wobei das neueste Bündel von Zustandsgrößen in dem Zustandsgrößenextraktionsschritt (S24) extrahiert ist, zu dem in der Einheitsraumdatei (S32) gespeicherten Einheitsraum, während das älteste Bündel von Zustandsgrößen aus dem Einheitsraum zu einem vordefinierten Aktualisierungszyklus, der länger als der Bewertungszyklus ist, gelöscht wird,
   **dadurch gekennzeichnet, dass**
   die Einheitsraumdatei (32) für jede einer Vielzahl von Gruppen der Vielzahl von Bewertungsobjekten einen Intra-Gruppeneinheitsraum speichert, der durch eine Vielzahl von Intra-Gruppenbündeln konfiguriert ist, von welchen jedes eine Sammlung von Zustandsgrößen von jeweiligen Bewertungsobjekten in der Gruppe darstellt, und für jeden einer Vielzahl von Intra-Gruppeneinheitsräumen einen MD-Einheitsraum, der durch die Mahalanobisentfernungen einer Vielzahl von Intra-Gruppenbündeln konfiguriert ist, die den Intra-Gruppeneinheitsraum konfigurieren, basierend auf dem Intra-Gruppeneinheitsraum speichert,
   in dem Mahalanobisentfernungs-Berechnungsschritt (S25) die Mahalanobisentfernung basierend auf dem Intra-Gruppeneinheitsraum korrespondierend zu der Gruppe unter der Vielzahl von Intra-Gruppeneinheitsräumen, die in der Einheitsraumdatei (32) gespeichert sind, als eine Intra-Gruppen-Mahalanobisentfernung mit Bezug auf die Vielzahl von Intra-Gruppenbündeln, die das Bündel von zu bewertenden Zustandsgrößen konfigurieren, das in dem Zustandsgrößenextraktionsschritt (S24) extrahiert ist, berechnet wird, und eine Gesamtmahalanobisentfernung, welche die Mahalanobisentfernung einer Sammlung einer Vielzahl von Intra-Gruppen-Mahalanobisentfernungen darstellt, basierend auf dem MD-Einheitsraum berechnet wird,
   in dem Bestimmungsschritt (S31) bestimmt wird, ob der Betriebszustand der Anlage (1) normal ist oder nicht, in Abhängigkeit davon, ob die Gesamtmahalanobisentfernung innerhalb des vorbestimmten Schwellenwerts liegt oder nicht,
   in dem Einheitsraumaktualisierungsschritt (S36), wenn der Aktualisierungszyklus erreicht ist, das Bündel von Zustandsgrößen in der Gruppe aus dem Bündel von Zustandsgrößen, die in dem Zustandsgrößenextraktionsschritt (S24) extrahiert sind, zu jedem in der Einheitsraumdatei (32) gespeicherten Intra-Gruppeneinheitsraum hinzugefügt wird, während das älteste Intra-Gruppenbündel in der Gruppe aus dem Intra-Gruppeneinheitsraum gelöscht wird, und

in dem Mahalanobisentfernungs-Berechnungsschritt (S25), falls eine Vielzahl von neuen Intra-Gruppeneinheitsräumen in der Einheitsraumdatei (32) gespeichert sind, für jede der Vielzahl von Intra-Gruppeneinheitsräumen die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum berechnet werden, und der MD-Einheitsraum, welcher die Sammlung der Vielzahl von Intra-Gruppen-Mahalanobisentfernungen darstellt, erzeugt wird.

**12.** Anlagenüberwachungsverfahren nach Anspruch 11, ferner ausführend:

einen Einheitsraum-Anfangseinstellschritt zum Extrahieren des Bündels von Zustandsgrößen aus der Vielzahl von Bündeln von Zustandsgrößen, die in der Zustandsgrößendatei (31) gespeichert sind, bis die Anzahl an Bündeln von Zustandsgrößen, die in der Lage sind, den Einheitsraum zu konfigurieren, erreicht ist, wenn der Einheitsraum nicht in der Einheitsraumdatei (32) gespeichert ist, und Speichern des Bündels von Zustandsgrößen in der Einheitsraumdatei (32).

**13.** Anlagenüberwachungsverfahren nach Anspruch 11, ferner ausführend:

einen Einheitsraum-Anfangseinstellschritt zum Extrahieren des Intra-Gruppenbündels aus der Vielzahl von Bündeln von Zustandsgrößen, die in der Zustandsgrößendatei (31) gespeichert sind, bis die Anzahl an Intra-Gruppenbündeln, die in der Lage sind, den Intra-Gruppeneinheitsraum zu konfigurieren, erreicht ist, wenn der Intra-Gruppeneinheitsraum von jeder der Vielzahl von Gruppen nicht in der Einheitsraumdatei (32) gespeichert ist, und Speichern des Intra-Gruppenbündels in der Einheitsraumdatei (32), wobei in dem Einheitsraum-Anfangseinstellschritt, falls die Intra-Gruppenbündel korrespondierend zu der Anzahl, die in der Lage ist, den Intra-Gruppeneinheitsraum zu konfigurieren, in der Einheitsraumdatei (32) gespeichert sind, in dem Mahalanobisentfernungs-Berechnungsschritt (S25) für jeden der Vielzahl von Intra-Gruppeneinheitsräumen die Intra-Gruppen-Mahalanobisentfernungen der Vielzahl von Intra-Gruppenbündeln, die den Intra-Gruppeneinheitsraum konfigurieren, basierend auf dem Intra-Gruppeneinheitsraum berechnet werden, und der MD-Einheitsraum, welcher die Sammlung der Vielzahl von Intra-Gruppen-Mahalanobisentfernungen darstellt, erzeugt wird.

## Revendications

**1.** Dispositif de surveillance d'installation (100) pour surveiller l'état de fonctionnement d'une installation (1) ayant une pluralité d'éléments d'évaluation, le dispositif de surveillance d'installation comprenant :

des moyens d'acquisition de grandeurs d'état (11) pour acquérir, auprès de l'installation (1), un lot de grandeurs d'état qui est un recueil de grandeurs d'état des éléments d'évaluation respectifs ;
des moyens de stockage de grandeurs d'état (31) pour stocker le lot de grandeurs d'état acquis par les moyens d'acquisition de grandeurs d'état (11) ;
des moyens de stockage d'espace d'unité (32) pour stocker un espace d'unité configuré par une pluralité de lots de grandeurs d'état ;
des moyens d'extraction de grandeurs d'état (13) pour extraire, à chaque cycle d'évaluation prédéfini, un lot de grandeurs d'état à évaluer depuis les moyens de stockage de grandeurs d'état (31) ;
des moyens de calcul de distance de Mahalanobis (14) pour calculer, à chaque cycle d'évaluation, la distance de Mahalanobis du lot de grandeurs d'état extrait par les moyens d'extraction de grandeurs d'état (13) d'après l'espace d'unité stocké dans les moyens de stockage d'espace d'unité (32) ;
des moyens de détermination (15) pour déterminer, à chaque cycle d'évaluation, si l'état de fonctionnement de l'installation (1) est normal ou non selon si la distance de Mahalanobis calculée par les moyens de calcul de distance de Mahalanobis (14) est ou non dans une valeur seuil prédéterminée ; et
des moyens de mise à jour d'espace d'unité (16) pour ajouter le lot le plus récent de grandeurs d'état pour lequel il est déterminé que l'état de fonctionnement de l'installation (1) est normal, le lot le plus récent de grandeurs d'état étant extrait par les moyens d'extraction de grandeurs d'état (13), à l'espace d'unité stocké dans les moyens de stockage d'espace d'unité (32) tout en supprimant le lot le plus ancien de grandeurs d'état de l'espace d'unité à un cycle de mise à jour prédéfini plus long que le cycle d'évaluation,
**caractérisé en ce que**
les moyens de stockage d'espace d'unité (32) sont configurés pour stocker, pour chacun d'une pluralité de groupes de la pluralité d'éléments d'évaluation, un espace d'unité intragroupe configuré par une pluralité de lots intragroupes, dont chacun est un recueil de grandeurs d'état d'éléments d'évaluation respectifs dans le groupe, et pour stocker, pour chacun d'une pluralité d'espaces d'unité intragroupes, un espace d'unité MD configuré par les distances de Mahalanobis d'une pluralité de lots intragroupes configurant l'espace d'unité intragroupe d'après l'espace d'unité intragroupe,

les moyens de calcul de distance de Mahalanobis (14) sont configurés pour calculer la distance de Mahalanobis d'après l'espace d'unité intragroupe correspondant au groupe parmi la pluralité d'espaces d'unité intragroupes stockés dans les moyens de stockage d'espace d'unité (32) en tant que distance de Mahalanobis intragroupe par rapport à la pluralité de lots intragroupes configurant le lot de grandeurs d'état à évaluer extrait par les moyens d'extraction de grandeurs d'état (13), et pour calculer une distance de Mahalanobis totale, qui est la distance de Mahalanobis d'un recueil d'une pluralité de distances de Mahalanobis intragroupes, d'après l'espace d'unité MD,

les moyens de détermination (15) sont configurés pour déterminer si l'état de fonctionnement de l'installation (1) est normal ou non selon si la distance de Mahalanobis totale est ou non dans la valeur seuil prédéterminée,

lorsque le cycle d'évaluation et le cycle de mise à jour sont atteints, les moyens de mise à jour d'espace d'unité (16) sont configurés pour ajouter le lot de grandeurs d'état dans le groupe parmi le lot de grandeurs d'état extrait par les moyens d'extraction de grandeurs d'état (13) à chaque espace d'unité intragroupe stocké dans les moyens de stockage d'espace d'unité (32) tout en supprimant le lot intragroupe le plus ancien dans le groupe de l'espace d'unité intragroupe, et

si une pluralité de nouveaux espaces d'unité intragroupes sont stockés dans les moyens de stockage d'espace d'unité (32), les moyens de calcul de distance de Mahalanobis (14) sont configurés pour calculer, pour chacun de la pluralité d'espaces d'unité intragroupes, les distances de Mahalanobis intragroupes de la pluralité de lots intragroupes configurant l'espace d'unité intragroupe d'après l'espace d'unité intragroupe, et pour créer l'espace d'unité MD qui est le recueil de la pluralité de distances de Mahalanobis intragroupes.

2. Dispositif de surveillance d'installation (100) selon la revendication 1, comprenant en outre :

des moyens de réglage initial d'espace d'unité (12) pour, lorsque l'espace d'unité n'est pas stocké dans les moyens de stockage d'espace d'unité (32), extraire le lot de grandeurs d'état de la pluralité de lots de grandeurs d'état stockés dans les moyens de stockage de grandeurs d'état (31) jusqu'à ce que le nombre de lots de grandeurs d'état capable de configurer l'espace d'unité soit atteint, et stocker le lot de grandeurs d'état dans les moyens de stockage d'espace d'unité (32).

3. Dispositif de surveillance d'installation (100) selon la revendication 1 ou 2, dans lequel, si les moyens de détermination (15) déterminent que la distance de Mahalanobis relative au lot de grandeurs d'état extrait par les moyens d'extraction de grandeurs d'état (13) n'est pas dans la valeur seuil prédéterminée, les moyens de mise à jour d'espace d'unité (16) sont configurés pour ne pas ajouter le lot de grandeurs d'état à l'espace d'unité stocké dans les moyens de stockage d'espace d'unité (32) et ne pas supprimer le lot le plus ancien de grandeurs d'état de l'espace d'unité même lors du cycle de mise à jour.

4. Dispositif de surveillance d'installation (100) selon la revendication 1, comprenant en outre :

des moyens de réglage initial d'espace d'unité (12) pour, lorsque l'espace d'unité intragroupe de chacun de la pluralité de groupes n'est pas stocké dans les moyens de stockage d'espace d'unité (32), extraire le lot intragroupe de la pluralité de lots de grandeurs d'état stockés dans les moyens de stockage de grandeurs d'état (31) jusqu'à ce que le nombre de lots intragroupes capable de configurer l'espace d'unité intragroupe soit atteint, et stocker le lot intragroupe dans les moyens de stockage d'espace d'unité (32),

dans lequel, si les lots intragroupes correspondant au nombre capable de configurer l'espace d'unité intragroupe sont stockés dans les moyens de stockage d'espace d'unité (32), les moyens de réglage initial d'espace d'unité (12) est configuré pour amener les moyens de calcul de distance de Mahalanobis (14) à calculer, pour chacun de la pluralité d'espaces d'unité intragroupes, les distances de Mahalanobis intragroupes de la pluralité de lots intragroupes configurant l'espace d'unité intragroupe d'après l'espace d'unité intragroupe, et pour créer l'espace d'unité MD qui est le recueil de la pluralité de distances de Mahalanobis intragroupes.

5. Dispositif de surveillance d'installation (100) selon l'une quelconque des revendications 1 à 4, comprenant en outre :

des moyens de changement de cycle d'évaluation pour changer le cycle d'évaluation.

**6.** Dispositif de surveillance d'installation (100) selon l'une quelconque des revendications 1 à 5, comprenant en outre :

des moyens de changement de cycle de mise à jour pour changer le cycle de mise à jour.

**7.** Programme de surveillance d'installation (35) pour surveiller l'état de fonctionnement d'une installation (1) ayant une pluralité d'éléments d'évaluation, le programme de surveillance d'installation (35) amenant un ordinateur à exécuteur :

une étape d'extraction de grandeurs d'état (S24) consistant à extraire, à chaque cycle d'évaluation prédéfini, un lot de grandeurs d'état à évaluer depuis un fichier de grandeurs d'état (31) d'une unité de stockage (30) de l'ordinateur, dans lequel un lot de grandeurs d'état qui est un recueil de grandeurs d'état des éléments d'évaluation respectifs acquis auprès de l'installation (1) est stocké en série chronologique ;
une étape de calcul de distance de Mahalanobis (S25) consistant à calculer, à chaque cycle d'évaluation, la distance de Mahalanobis du lot de grandeurs d'état extrait à l'étape d'extraction de grandeurs d'état (S24) d'après un espace d'unité stocké dans un fichier d'espace d'unité (32) de l'unité de stockage (30) et configuré par une pluralité de lots de grandeurs d'état ;
une étape de détermination (S31) consistant à déterminer, à chaque cycle d'évaluation, si l'état de fonctionnement de l'installation (1) est normal ou non selon si la distance de Mahalanobis calculée à l'étape de calcul de distance de Mahalanobis (S25) est ou non dans une valeur seuil prédéterminée ; et
une étape de mise à jour d'espace d'unité (S36) consistant à ajouter le lot le plus récent de grandeurs d'état pour lequel il est déterminé que l'état de fonctionnement de l'installation (1) est normal, le lot le plus récent de grandeurs d'état étant extrait à l'étape d'extraction de grandeurs d'état (S24), à l'espace d'unité stocké dans le fichier d'espace d'unité (32) tout en supprimant le lot le plus ancien de grandeurs d'état de l'espace d'unité à un cycle de mise à jour prédéfini plus long que le cycle d'évaluation,
**caractérisé en ce que**
le fichier d'espace d'unité (32) stocke, pour chacun d'une pluralité de groupes de la pluralité d'éléments d'évaluation, un espace d'unité intragroupe configuré par une pluralité de lots intragroupes, dont chacun est un recueil de grandeurs d'état d'éléments d'évaluation respectifs dans le groupe, et stocke, pour chacun d'une pluralité d'espaces d'unité intragroupes, un espace d'unité MD configuré par les distances de Mahalanobis d'une pluralité de lots intragroupes configurant l'espace d'unité intragroupe d'après l'espace d'unité intragroupe,
à l'étape de calcul de distance de Mahalanobis (S25), la distance de Mahalanobis d'après l'espace d'unité intragroupe correspondant au groupe parmi la pluralité d'espaces d'unité intragroupes stockés dans le fichier d'espace d'unité (32) est calculée en tant que distance de Mahalanobis intragroupe par rapport à la pluralité de lots intragroupes configurant le lot de grandeurs d'état à évaluer extrait à l'étape d'extraction de grandeurs d'état (S24), et une distance de Mahalanobis totale, qui est la distance de Mahalanobis d'un recueil d'une pluralité de distances de Mahalanobis intragroupes, est calculée d'après l'espace d'unité MD,
à l'étape de détermination (S31), on détermine si l'état de fonctionnement de l'installation (1) est normal ou non selon si la distance de Mahalanobis totale est ou non dans la valeur seuil prédéterminée,
à l'étape de mise à jour d'espace d'unité (S36), lorsque le cycle de mise à jour est atteint, le lot de grandeurs d'état dans le groupe parmi le lot de grandeurs d'état extrait à l'étape d'extraction de grandeurs d'état (S24) est ajouté à chaque espace d'unité intragroupe stocké dans le fichier d'espace d'unité (32) tandis que le lot intragroupe le plus ancien dans le groupe est supprimé de l'espace d'unité intragroupe, et
à l'étape de calcul de distance de Mahalanobis (S25), si une pluralité de nouveaux espaces d'unité intragroupes sont stockés dans le fichier d'espace d'unité (32), pour chacun de la pluralité d'espaces d'unité intragroupes, les distances de Mahalanobis intragroupes de la pluralité de lots intragroupes configurant l'espace d'unité intragroupe sont calculées d'après l'espace d'unité intragroupe, et l'espace d'unité MD qui est le recueil de la pluralité de distances de Mahalanobis intragroupes est créé.

**8.** Programme de surveillance d'installation (35) selon la revendication 7, amenant l'ordinateur à exécuteur :

une étape d'acquisition de grandeurs d'état (S11) consistant à acquérir un lot de grandeurs d'état, qui est un recueil de grandeurs d'état des éléments d'évaluation respectifs, auprès de l'installation (1) et à stocker le lot de grandeurs d'état dans le fichier de grandeurs d'état (31).

**9.** Programme de surveillance d'installation (35) selon la revendication 7 ou 8, amenant l'ordinateur à exécuteur :

une étape de réglage initial d'espace d'unité consistant, lorsque l'espace d'unité n'est pas stocké dans le fichier d'espace d'unité (32), à extraire le lot de grandeurs d'état de la pluralité de lots de grandeurs d'état stockés dans le fichier de grandeurs d'état (31), jusqu'à ce que le nombre de lots de grandeurs d'état capable de configurer l'espace d'unité soit atteint, et à stocker le lot de grandeurs d'état dans le fichier d'espace d'unité (32).

10. Programme de surveillance d'installation (35) selon la revendication 7, amenant l'ordinateur à exécuteur :

une étape de réglage initial d'espace d'unité consistant, lorsque l'espace d'unité intragroupe de chacun de la pluralité de groupes n'est pas stocké dans le fichier d'espace d'unité (32), à extraire le lot intragroupe de la pluralité de lots de grandeurs d'état stockés dans le fichier de grandeurs d'état (31) jusqu'à ce que le nombre de lots intragroupes capable de configurer l'espace d'unité intragroupe soit atteint, et à stocker le lot intragroupe dans le fichier d'espace d'unité (32),
dans lequel, à l'étape de réglage initial d'espace d'unité, si les lots intragroupes correspondant au nombre capable de configurer l'espace d'unité intragroupe sont stockés dans le fichier d'espace d'unité (32), à l'étape de calcul de distance de Mahalanobis (S25), pour chacun de la pluralité d'espaces d'unité intragroupes, les distances de Mahalanobis intragroupes de la pluralité de lots intragroupes configurant l'espace d'unité intragroupe sont calculées d'après l'espace d'unité intragroupe, et l'espace d'unité MD qui est le recueil de la pluralité de distances de Mahalanobis intragroupes est créé.

11. Procédé de surveillance d'installation pour surveiller l'état de fonctionnement d'une installation (1) ayant une pluralité d'éléments d'évaluation, le procédé exécutant :

une étape d'acquisition de grandeurs d'état (S11) consistant à acquérir un lot de grandeurs d'état, qui est un recueil de grandeurs d'état des éléments d'évaluation respectifs, auprès de l'installation (1) et à stocker le lot de grandeurs d'état dans un fichier de grandeurs d'état (31) ;
une étape d'extraction de grandeurs d'état (S24) consistant à extraire un lot de grandeurs d'état à évaluer depuis le fichier de grandeurs d'état (31) à chaque cycle d'évaluation prédéfini ;
une étape de calcul de distance de Mahalanobis (S25) consistant à calculer, à chaque cycle d'évaluation, la distance de Mahalanobis du lot de grandeurs d'état extrait à l'étape d'extraction de grandeurs d'état (S24) d'après un espace d'unité stocké dans un fichier d'espace d'unité (32) et configuré par une pluralité de lots de grandeurs d'état ;
une étape de détermination (S31) consistant à déterminer, à chaque cycle d'évaluation, si l'état de fonctionnement de l'installation (1) est normal ou non selon si la distance de Mahalanobis calculée à l'étape de calcul de distance de Mahalanobis (S25) est ou non dans une valeur seuil prédéterminée ; et
une étape de mise à jour d'espace d'unité (S36) consistant à ajouter le lot le plus récent de grandeurs d'état pour lequel on détermine que l'état de fonctionnement de l'installation (1) est normal, le lot le plus récent de grandeurs d'état étant extrait à l'étape d'extraction de grandeurs d'état (S24), à l'espace d'unité stocké dans le fichier d'espace d'unité (32) tout en supprimant le lot le plus ancien de grandeurs d'état de l'espace d'unité à un cycle de mise à jour prédéfini plus long que le cycle d'évaluation,
**caractérisé en ce que**
le fichier d'espace d'unité (32) stocke, pour chacun d'une pluralité de groupes de la pluralité d'éléments d'évaluation, un espace d'unité intragroupe configuré par une pluralité de lots intragroupes, dont chacun est un recueil de grandeurs d'état d'éléments d'évaluation respectifs dans le groupe, et stocke, pour chacun d'une pluralité d'espaces d'unité intragroupes, un espace d'unité MD configuré par les distances de Mahalanobis d'une pluralité de lots intragroupes configurant l'espace d'unité intragroupe d'après l'espace d'unité intragroupe,
à l'étape de calcul de distance de Mahalanobis (S25), la distance de Mahalanobis d'après l'espace d'unité intragroupe correspondant au groupe parmi la pluralité d'espaces d'unité intragroupes stockés dans le fichier d'espace d'unité (32) est calculée en tant que distance de Mahalanobis intragroupe par rapport à la pluralité de lots intragroupes configurant le lot de grandeurs d'état à évaluer extrait à l'étape d'extraction de grandeurs d'état (S24), et une distance de Mahalanobis totale, qui est la distance de Mahalanobis d'un recueil d'une pluralité de distances de Mahalanobis intragroupes, est calculée d'après l'espace d'unité MD,
à l'étape de détermination (S31), on détermine si l'état de fonctionnement de l'installation (1) est normal ou non selon si la distance de Mahalanobis totale est ou non dans la valeur seuil prédéterminée,
à l'étape de mise à jour d'espace d'unité (S36), lorsque le cycle de mise à jour est atteint, le lot de grandeurs d'état dans le groupe parmi le lot de grandeurs d'état extrait à l'étape d'extraction de grandeurs d'état (S24) est ajouté à chaque espace d'unité intragroupe stocké dans le fichier d'espace d'unité (32) tandis que le lot intragroupe le plus ancien dans le groupe est supprimé de l'espace d'unité intragroupe, et
à l'étape de calcul de distance de Mahalanobis (S25), si une pluralité de nouveaux espaces d'unité intragroupes sont stockés dans le fichier d'espace d'unité (32), pour chacun de la pluralité d'espaces d'unité intragroupes, les distances de Mahalanobis intragroupes de la pluralité de lots intragroupes configurant l'espace d'unité intragroupe sont calculées d'après l'espace d'unité intragroupe, et l'espace d'unité MD qui est le recueil de la pluralité de distances de Mahalanobis intragroupes est créé.

12. Procédé de surveillance d'installation selon la revendication 11, exécutant en outre :

une étape de réglage initial d'espace d'unité consistant, lorsque l'espace d'unité n'est pas stocké dans le fichier d'espace d'unité (32), à extraire le lot de grandeurs d'état de la pluralité de lots de grandeurs d'état stockés dans le fichier de grandeurs d'état (31) jusqu'à ce que le nombre de lots de grandeurs d'état capable de configurer l'espace d'unité soit atteint, et à stocker le lot de grandeurs d'état dans le fichier d'espace d'unité (32).

13. Procédé de surveillance d'installation selon la revendication 11, exécutant en outre :

une étape de réglage initial d'espace d'unité consistant, lorsque l'espace d'unité intragroupe de chacun de la pluralité de groupes n'est pas stocké dans le fichier d'espace d'unité (32), à extraire le lot intragroupe de la pluralité de lots de grandeurs d'état stockés dans le fichier de grandeurs d'état (31) jusqu'à ce que le nombre de lots intragroupes capable de configurer l'espace d'unité intragroupe soit atteint, et à stocker le lot intragroupe dans le fichier d'espace d'unité (32),
dans lequel, à l'étape de réglage initial d'espace d'unité, si les lots intragroupes correspondant au nombre capable de configurer l'espace d'unité intragroupe sont stockés dans le fichier d'espace d'unité (32), à l'étape de calcul de distance de Mahalanobis (S25), pour chacun de la pluralité d'espaces d'unité intragroupes, les distances de Mahalanobis intragroupes de la pluralité de lots intragroupes configurant l'espace d'unité intragroupe sont calculées d'après l'espace d'unité intragroupe, et l'espace d'unité MD qui est le recueil de la pluralité de distances de Mahalanobis intragroupes est créé.

## FIG. 1

# FIG. 2

31

| ACQUISITION TIME | EVALUATION ITEM | | | | | |
|---|---|---|---|---|---|---|
| | STATE QUANTITY 1 | STATE QUANTITY 2 | STATE QUANTITY 3 | STATE QUANTITY 4 | ... | STATE QUANTITY u |
| 04/11/11 09:05 | $X_{1\cdot1}$ | $X_{2\cdot1}$ | $X_{3\cdot1}$ | $X_{4\cdot1}$ | ... | $X_{u\cdot1}$ |
| 04/11/11 09:06 | $X_{1\cdot2}$ | $X_{2\cdot2}$ | $X_{3\cdot2}$ | $X_{4\cdot2}$ | ... | $X_{u\cdot2}$ |
| 04/11/11 09:07 | $X_{1\cdot3}$ | $X_{2\cdot3}$ | $X_{3\cdot3}$ | $X_{4\cdot3}$ | ... | $X_{u\cdot3}$ |
| 04/11/11 09:08 | $X_{1\cdot4}$ | $X_{2\cdot4}$ | $X_{3\cdot4}$ | $X_{4\cdot4}$ | ... | $X_{u\cdot4}$ |
| ⋮ | ⋮ | ⋮ | ⋮ | ⋮ | ⋮ | ⋮ |
| 04/11/11 09:14 | $X_{1\cdot10}$ | $X_{2\cdot10}$ | $X_{3\cdot10}$ | $X_{4\cdot10}$ | ... | $X_{u\cdot10}$ |
| 04/11/11 09:15 | $X_{1\cdot11}$ | $X_{2\cdot11}$ | $X_{3\cdot11}$ | $X_{4\cdot11}$ | ... | $X_{u\cdot11}$ |
| 04/11/11 09:16 | $X_{1\cdot12}$ | $X_{2\cdot12}$ | $X_{3\cdot12}$ | $X_{4\cdot12}$ | ... | $X_{u\cdot12}$ |
| ⋮ | ⋮ | ⋮ | ⋮ | ⋮ | ⋮ | ⋮ |
| 04/11/11 11:01 | $X_{1\cdot117}$ | $X_{2\cdot117}$ | $X_{3\cdot117}$ | $X_{4\cdot117}$ | ... | $X_{u\cdot117}$ |
| 04/11/11 11:02 | $X_{1\cdot118}$ | $X_{2\cdot118}$ | $X_{3\cdot118}$ | $X_{4\cdot118}$ | ... | $X_{u\cdot118}$ |
| 04/11/11 11:03 | $X_{1\cdot119}$ | $X_{2\cdot119}$ | $X_{3\cdot119}$ | $X_{4\cdot119}$ | ... | $X_{u\cdot119}$ |
| 04/11/11 11:04 | $X_{1\cdot120}$ | $X_{2\cdot120}$ | $X_{3\cdot120}$ | $X_{4\cdot120}$ | ... | $X_{u\cdot120}$ |
| 04/11/11 11:05 | $X_{1\cdot121}$ | $X_{2\cdot121}$ | $X_{3\cdot121}$ | $X_{4\cdot121}$ | ... | $X_{u\cdot121}$ |
| ⋮ | ⋮ | ⋮ | ⋮ | ⋮ | ⋮ | ⋮ |
| 04/11/11 14:33 | $X_{1\cdot329}$ | $X_{2\cdot329}$ | $X_{3\cdot329}$ | $X_{4\cdot329}$ | ... | $X_{u\cdot329}$ |
| 04/11/11 14:34 | $X_{1\cdot330}$ | $X_{2\cdot330}$ | $X_{3\cdot330}$ | $X_{4\cdot330}$ | ... | $X_{u\cdot330}$ |
| 04/11/11 14:35 | $X_{1\cdot331}$ | $X_{2\cdot331}$ | $X_{3\cdot331}$ | $X_{4\cdot331}$ | ... | $X_{u\cdot331}$ |

31b 31a

# FIG. 3

| 32<br>ACQUISITION TIME | EVALUATION ITEM | | | | | CONFIGURATION COMPLETION /CONFIGURATION INCOMPLETION — 32c |
|---|---|---|---|---|---|---|
| | STATE QUANTITY 1 | STATE QUANTITY 2 | STATE QUANTITY 3 | STATE QUANTITY 4 | ... | STATE QUANTITY u — 32a |
| 04/11/11 09:15 | $X_{1\cdot11}$ | $X_{2\cdot11}$ | $X_{3\cdot11}$ | $X_{4\cdot11}$ | ... | $X_{u\cdot11}$ |
| 04/11/11 09:16 | $X_{1\cdot12}$ | $X_{2\cdot12}$ | $X_{3\cdot12}$ | $X_{4\cdot12}$ | ... | $X_{u\cdot12}$ |
| 04/11/11 09:17 | $X_{1\cdot13}$ | $X_{2\cdot13}$ | $X_{3\cdot13}$ | $X_{4\cdot13}$ | ... | $X_{u\cdot13}$ |
| 04/11/11 09:18 | $X_{1\cdot14}$ | $X_{2\cdot14}$ | $X_{3\cdot14}$ | $X_{4\cdot14}$ | ... | $X_{u\cdot14}$ |
| ⋮ | ⋮ | ⋮ | ⋮ | ⋮ | ⋮ | ⋮ |
| 04/11/11 11:01 | $X_{1\cdot117}$ | $X_{2\cdot117}$ | $X_{3\cdot117}$ | $X_{4\cdot117}$ | ... | $X_{u\cdot117}$ |
| 04/11/11 11:02 | $X_{1\cdot118}$ | $X_{2\cdot118}$ | $X_{3\cdot118}$ | $X_{4\cdot118}$ | ... | $X_{u\cdot118}$ |
| 04/11/11 11:05 | $X_{1\cdot121}$ | $X_{2\cdot121}$ | $X_{3\cdot121}$ | $X_{4\cdot121}$ | ... | $X_{u\cdot121}$ |
| ⋮ | ⋮ | ⋮ | ⋮ | ⋮ | ⋮ | ⋮ |
| 04/11/11 14:31 | $X_{1\cdot327}$ | $X_{2\cdot327}$ | $X_{3\cdot327}$ | $X_{4\cdot327}$ | ... | $X_{u\cdot327}$ |
| 04/11/11 14:32 | $X_{1\cdot328}$ | $X_{2\cdot328}$ | $X_{3\cdot328}$ | $X_{4\cdot328}$ | ... | $X_{u\cdot328}$ |
| 04/11/11 14:33 | $X_{1\cdot329}$ | $X_{2\cdot329}$ | $X_{3\cdot329}$ | $X_{4\cdot329}$ | ... | $X_{u\cdot329}$ |

32b

300

# FIG. 4

# FIG. 5

```
                    ┌──────────────┐
                    │    START     │
                    └──────┬───────┘
                           │
            ┌──────────────▼──────────────┐
            │  ACQUIRE STATE QUANTITY      │~S11
            │     OF EACH ITEM             │
            └──────────────┬──────────────┘
                           │              S12
                      ◇────▼─────◇
                 ACQUIRED STATE            No
           QUANTITY IS WITHIN NORMAL ──────────►
                    RANGE?
                      ◇────┬─────◇
                         Yes│
            ┌──────────────▼──────────────┐
            │  FETCH AS CONFIGURATION      │~S13
            │     DATA OF UNIT SPACE       │
            └──────────────┬──────────────┘
                           │              S14
                      ◇────▼─────◇
              NUMBER OF BUNDLES
        OF STATE QUANTITIES IS NUMBER v CAPABLE   No
              OF CONFIGURING UNIT ──────────────►
                    SPACE?
                      ◇────┬─────◇
                         Yes│
            ┌──────────────▼──────────────┐
            │    SET CONFIGURATION         │~S15
            │ COMPLETION OF UNIT SPACE     │
            └──────────────┬──────────────┘
                           │
                          (A)
```

## FIG. 6

# FIG. 7

## FIG. 8

| G1 | G2 | G3 | G4 | G5 |
|----|----|----|----|----|
| X1 X2 ⋯ X20 | X21 X22 ⋯ X40 | X41 X42 ⋯ X60 | X61 X62 ⋯ X80 | X81 X82 ⋯ X100 |
| GD1 | GD2 | GD3 | GD4 | GD5 |

WD

DETERMINATION ⎯ S31

EP 2 897 012 B1

FIG. 9

EP 2 897 012 B1

## FIG. 10

START

ACQUIRE STATE QUANTITY
OF EACH ITEM — S11

S12

ACQUIRED
STATE QUANTITY IS WITHIN NORMAL
RANGE?

No

Yes

FETCH AS CONFIGURATION DATA
OF EACH INTRA-GROUP UNIT SPACE — S13a

S14a

NUMBER OF INTRA-GROUP
BUNDLES IS NUMBER CAPABLE OF CONFIGURING
INTRA-GROUP UNIT SPACE?

No

Yes

CREATE MD UNIT SPACE — S15a

SET CONFIGURATION COMPLETION
OF UNIT SPACE — S15

B

FIG. 11

(B)

| m=0 | S16

| n=0 | S17

| ACQUIRE STATE QUANTITY OF EACH ITEM | S21

| n=n+1 | S22

n=5? —No→ S23

Yes

| EXTRACT STATE QUANTITY OF EACH ITEM | S24

| CALCULATE INTRA-GROUP MAHALANOBIS DISTANCE OF EACH GROUP | S25a

| CALCULATE WHOLE MAHALANOBIS DISTANCE | S25b

| m=m+1 | S26

S27

m=48? —No

Yes

| m=0 | S28

WD≤Dc? —No→ S31

Yes

| DISPLAY "NORMAL" | S34

| ESTIMATE ABNORMAL ITEM | S32

S35

m=0? —No

Yes

| UPDATE INTRA-GROUP UNIT SPACE | S36a

| DISPLAY "ABNORMAL" | S33

| UPDATE MD UNIT SPACE | S36b

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009107805 A
- WO 2009104725 A1
- JP 2010191641 A
- US 2008312873 A1